# EUROPEAN PATENT APPLICATION

(11) **EP 1 416 706 A2**
(43) Date of publication of application: **06.05.2004**
(21) Application number: 03024584.9
(22) Date of filing: 28.10.2003
(51) Int. Cl.: H04M 15/00, H04M 17/00, G06F 17/60, H04Q 7/38

(54) **Charging system, charging method, and data-recording medium on which a charging control program is recorded**

(30) Priority: 28.10.2002 JP 2002313431
(71) Applicant: Pioneer Corporation, Tokyo-to (JP)
(72) Inventor: Shibasaki, Hiroaki, Pioneer Corp., Meguro-ku Tokyo-to (JP)
(74) Representative: Grünecker, Kinkeldey, Stockmair & Schwanhäusser Anwaltssozietät

(57) **Abstract**

There is provided a charging system or the like for charging a fee generated in an information provision system or the like using a communication network. An information provision system is set up which includes: a communication network including a communication apparatus C for monitoring a state of using a communication network; an attached terminal T for performing communication via the communication network; a processing apparatus H belonging to an administrator who manages a state of using communication of the attached terminal T; and a service provision apparatus I for providing the attached terminal T with information via the communication network. In a charging system for charging a fee generated by using this information provision system, the communication apparatus C includes: a fee calculation server for calculating a usage fee generated by using the information provision system; and a charging server for performing processing for charging the administrator this usage fee. In addition, the processing apparatus H includes: a payment acceptance processor for performing processing for the administrator to receive payment of a user's share set to a fixed amount in advance from a user of the attached terminal T; and a control processor for controlling generation of the usage fee according to charging conditions of the communication network at the time when the information provision system is used.

## Description

### BACKGROUND OF THE INVENTION

### 1. Field of the Invention

The present invention relates to a technical field of a charging system, a charging method, and a data-recording medium on which a charging control program in recorded.

### 2. Description of the Related Art

A user of a terminal apparatus such as a cellular phone executes communication using a communication network, which is owned by a communication carrier, from the terminal apparatus to acquire information. Such information acquired by the terminal apparatus is transmitted from a database in a communication apparatus owned by the communication carrier or transmitted from a service provision apparatus owned by a so-called contents provider. There exists an information provision system including the communication apparatus, the service provision apparatus, and the terminal apparatus described above. In general, the user of the terminal apparatus is charged a fee required for communication including acquisition of information (a fee for using the information provision system consisting of a communication fee and a service provision fee (information fee)) by the communication carrier. Then the user pays the fee.

### SUMMARY OF THE INVENTION

It is an example of an object of the present invention to provide a charging system, a charging method, and a data-recording medium on which a charging control program is recorded which are new in charging a fee which is generated as the terminal apparatus in the information provision system or the like performs communication including exchange of information.

The above object of the present invention can be achieved by a charging system provided with: a charging system for charging a fee generated by using an information provision system comprising: a communication network including a monitoring apparatus for monitoring a state of using the communication network; a terminal apparatus for performing communication via the communication network; an administrator's apparatus belonging to an administrator who administrates a state of using communication of the terminal apparatus; and an information provision apparatus for providing the terminal apparatus with information via the communication network; the charging system comprising: a first calculation device for calculating a first fee generated by using the information provision system; a charging processing device for performing processing for charging the administrator the first fee; a payment acceptance device for performing processing for the administrator to pay a second fee which is set to a fixed amount in advance by a user of the terminal apparatus; and a control device for controlling generation of the first fee according to charging conditions of the communication network at the time when the information provision system is used.

According to the present invention, in charging a fee generated by the terminal apparatus of the information provision system performing communication including exchange of information, a new charging system can be provided. In addition, in a state in which a second fee which the user of the terminal apparatus pays to the administrator is a fixed amount and, on the other hand, a first fee which the administrator is charged varies according to a state of using the terminal apparatus, since generation of a first fee is controlled according to charging conditions of the communication network, the first fee which the administrator is charged can be prevented from becoming excessive, and financial burden on the administrator would not be excessive.

In one aspect of the present invention, the charging system is, in a case where the information provision apparatus performs the communication for transmission of information to the terminal apparatus via the communication network, and the control device prohibits transmitting the information to the terminal apparatus in the case in which an amount of the information requested by the terminal apparatus to be transmitted is larger than a reference amount of information set in advance.

According to the present invention, in the case in which the amount of information requested by the terminal apparatus is larger than the reference amount of information set in advance, the requested information is prohibited from being transmitted to the terminal apparatus. Therefore a first fee generated by exchange of this information can be controlled, and financial burden on the administrator can be surely reduced.

In another aspect of the present invention, the charging system is, in a case where the information provision apparatus performs the communication for transmission of information to the terminal apparatus via the communication network, and the control device cuts down on transmitting the information to the terminal apparatus in the case in which an amount of the information requested by the terminal apparatus to be transmitted is larger than a reference amount of information set in advance.

According to the present invention, in the case in which the amount of information requested by the terminal apparatus is larger than the reference amount of information set in advance, the requested information is cut down on transmitting the information to the terminal apparatus. Therefore a first fee generated by exchange of this information can be controlled, and financial burden on the administrator can be surely reduced.

In further aspect of the present invention, the charging system is, wherein the control device uses one of an accumulated amount and an individual amount of the information requested by the terminal apparatus to be transmitted for the reference amount of information.

According to the present invention, in the case in which the reference amount of information is the accumulated amount of information requested by the terminal apparatus, transmission of information performed by the terminal apparatus in each period when the information is accumulated is prohibited or cut down on. Therefore a first fee generated by exchange of this information can be controlled, and financial burden on the administrator can be surely reduced. In addition, in the case in which the reference amount of information is an individual volume of information requested by the terminal apparatus, transmission of information performed by the terminal apparatus for communication performed once is prohibited or cut down on (restrained). Therefore, a first fee generated by exchange of this information can be controlled, and financial burden on the administrator can be surely reduced.

In further aspect of the present invention, the charging system is, wherein the charging processing device performs processing for charging according to a charging conditions which are determined according to a line usage rate as against all lines in the communication network, and the control device controls generation of the first rate by differentiating the reference amount of information in a first time frame in which the line usage rate is larger than a reference line usage rate set in advance and a second time frame in which the line usage rate is smaller than the reference line usage rate.

According to the present invention, since a day is divided into a time frame when a communication fee is high (first time frame) and another time frame when a communication fee is low (second time frame) according to charging conditions corresponding to the line usage rate, it becomes possible to, for example, further prohibit or cut down on transmission of information in the time frame when the communication fee is high according to the charging conditions. Therefore, a first fee generated by exchange of information, for which transmission is prohibited or cut down on, can be controlled, and financial burden on the administrator can be surely reduced.

In further aspect of the present invention, the charging system is, wherein the control device comprises: a first comparison device for comparing, in the first time frame, an amount of the information requested by the terminal apparatus to be transmitted and a first reference amount of information set in advance; and a first prohibition device for prohibiting transmitting the information when the amount of the information requested by the terminal apparatus to be transmitted exceeds the first reference amount of information.

According to the present invention, in the case in which a communication fee in the first time frame is high according to the charging conditions, since transmission of information in this time frame is prohibited, an amount of communication performed by the terminal apparatus (a data amount, the number of times of communication, or time of connection) is suppressed. Therefore, a first fee for the suppressed amount of communication can be controlled, and financial burden on the administrator can be surely reduced.

In further aspect of the present invention, the charging system is, wherein the control device comprises: a reservation device for making a reservation such that actual transmission is performed in the second time frame for the information requested by the terminal apparatus to be transmitted; and a execution device for executing transmission of the information in the second time frame based upon contents reserved by the reservation device.

According to the present invention, in the case in which a communication fee in the first time frame is high and a communication fee in the second time frame is low according to the charging conditions, the communication time frame when the communication fee is lower is effectively used for transmission of information, whereby a first fee can be controlled, and financial burden on the administrator can be reduced. Moreover, since exchange of information is performed in the second time frame rather than the first time frame, stability of communication including exchange of information as the communication network as a whole is improved.

In further aspect of the present invention, the charging system is, wherein the control device comprises: a second comparison device for comparing, in the second time frame, a second reference amount of information, which is set larger than the first reference amount of information in advance, and an amount of the information requested by the terminal apparatus to be transmitted; and a second prohibition device for prohibiting transmitting the information when the amount of the information requested by the terminal apparatus to be transmitted exceeds the second reference amount of information.

According to the present invention, since transmission of the information to the terminal apparatus is prohibited not only in the first time frame but also in the second time frame, an amount of communication performed by the terminal apparatus (a data amount, the number of times of communication, or connection time) is suppressed, a first fee for the suppressed amount of communication can be controlled, and financial burden on the administrator can be surely reduced. In addition, since transmission of information exceeding the reference amounts of information is limited in the first time frame and the second time frame, respectively, it becomes possible to estimate an upper limit of financial burden on the administrator, and the administrator can determine a fixed amount which is paid from the user of the terminal apparatus in a range in which the administrator does not bear excessive burden.

In further aspect of the present invention, the charging system is, wherein the control device further comprises a selection device which is used for deciding whether or not to adopt the reservation device.

According to the present invention, since such a selection device is provided, in the case in which the user of the terminal apparatus tries to acquire information, the user can determine whether or not to adopt the reservation device according to whether the user wishes to acquire information immediately, whether the user wishes to acquire information with a large amount of information, or the like. In addition, by setting the modes in advance, the control device can automatically select one of the modes, which is convenient for the user of the terminal apparatus.

In further aspect of the present invention, the charging system is, wherein the information provision apparatus comprises: an encryption device for encrypting the information to be transmitted to the terminal apparatus; and a decryption information transmission device for transmitting decryption information, which makes it possible to decrypt the encrypted information in the terminal apparatus, to the terminal apparatus.

According to the present invention, since the encrypted information is sent to the terminal apparatus and the information for making it possible to decrypt this information is also sent to the terminal apparatus, a time difference is given to transmission of these pieces of information, whereby the user of the terminal apparatus can receive the information with a large volume, which the user requires originally, collectively in the second time frame and receive the decryption information later, at which point the use of the information is made possible. In addition, after the terminal apparatus has received the encrypted information, in the case in which the terminal apparatus requires the information, the decryption information is requested again. Consequently, the encrypted information can be sent from the information provision apparatus in terms of promotion and advertisement of the information which should be provided originally.

In further aspect of the present invention, the charging system is, wherein the administrator's apparatus comprises: a relay device for relaying communication between the information provision apparatus and the monitoring apparatus; a second calculation device for calculating an amount of transmitted information which has been transmitted to the terminal apparatus; and a storage device for storing the calculated amount of the information.

According to the present invention, since the administrator's apparatus includes the relay device, the second calculation device, and the storage device described above, a state of using communication of the terminal apparatus can be grasped better, which is convenient for performing the control processing. Further, since the administrator's apparatus belonging to the administrator performs the control processing, the administrator pays a first fee to the communication carrier. Therefore, transmission of information to the terminal apparatus can be prohibited or cut down on (restrained) accurately according to the charging conditions of the communication network.

In further aspect of the present invention, the charging system is, wherein at least one of the communication network including the monitoring apparatus, the terminal apparatus, the administrator's apparatus, and the information provision apparatus provide at least one of the first calculation device, the charging processing device, the payment acceptance device, and the control device.

According to the present invention, in charging a fee generated by the terminal apparatus of the information provision system performing communication including exchange of information, a new. charging system can be provided. In addition, in a state in which a second fee which the user of the terminal apparatus pays to the administrator is a fixed amount and, on the other hand, a first fee which the administrator is charged varies according to a state of using the terminal apparatus, since generation of a first fee is controlled according to charging conditions of the communication network, the first fee which the administrator is charged can be prevented from becoming excessive, and financial burden on the administrator would not be excessive.

The above object of the present invention can be achieved by a monitoring apparatus of the present invention. The monitoring apparatus included in a charging system for charging a fee generated by using an information provision system comprising: a communication network including the monitoring apparatus for monitoring a state of using the communication network; a terminal apparatus for performing communication via the communication network; an administrator's apparatus belonging to an administrator who administrates a state of using communication of the terminal apparatus; and an information provision apparatus for providing the terminal apparatus with information via the communication network; the monitoring apparatus comprising: a first calculation device for calculating a first fee generated by using the information provision system; a charging processing device for performing processing for charging the administrator the first fee.

According to the present invention, since it is sufficient for the communication carrier, which is the owner of the monitoring apparatus, to charge only the administrator a calculated first fee, procedural burden on the communication carrier due to charging processing for charging each user of the terminal apparatus, which has been conventionally performed by the communication carrier, can be reduced.

The above object of the present invention can be achieved by a terminal apparatus of the present invention. The terminal apparatus included in a charging system for charging a fee generated by using an information provision system comprising: a communication network including a monitoring apparatus for monitoring a state of using the communication network; the terminal apparatus for performing communication via the communication network; an administrator's apparatus belonging to an administrator who administrates a state of using communication of the terminal apparatus; and an information provision apparatus for providing the terminal apparatus with information via the communication network; the terminal apparatus comprising: a control device for controlling generation of the first fee according to charging conditions of the communication network at the time when the information provision system is used.

According to the present invention, in charging a fee generated by the terminal apparatus of the information provision system performing communication including exchange of information, a new charging system can be provided. In addition, in a state in which a second fee which the user of the terminal apparatus pays to the administrator is a fixed amount and, on the other hand, a first fee which the administrator is charged varies according to a state of using the terminal apparatus, since generation of a first fee is controlled according to charging conditions of the communication network, the first fee which the administrator is charged can be prevented from becoming excessive, and financial burden on the administrator would not be excessive.

The above object of the present invention can be achieved by an administrator's apparatus of the present invention. The administrator's apparatus included in a charging system for charging a fee generated by using an information provision system comprising: a communication network including a monitoring apparatus for monitoring a state of using the communication network; a terminal apparatus for performing communication via the communication network; the administrator's apparatus belonging to an administrator who administrates a state of using communication of the terminal apparatus; and an information provision apparatus for providing the terminal apparatus with information via the communication network; the administrator's apparatus comprising: a payment acceptance device for performing processing for the administrator to pay a second fee which is set to a fixed amount in advance by a user of the terminal apparatus; and a relay device for relaying communication between the information provision apparatus and the monitoring apparatus; a second calculation device for calculating an amount of transmitted information which has been transmitted to the terminal apparatus; and a storage device for storing the calculated amount of the information.

According to the present invention, the administrator receives payment of a fixed amount of fee from the user of the terminal apparatus through the payment acceptance device provided in the administrator's apparatus. On the other hand, since the administrator's apparatus includes the relay device, the second calculation device, and the storage device described above, a state of using communication of the terminal apparatus can be grasped better, which is convenient for performing the control processing. Further, since the administrator's apparatus belonging to the administrator performs the control processing, transmission of information to the terminal apparatus can be prohibited or cut down on (restrained) accurately according to the charging conditions of the communication network, and a first fee, which the administrator is charged, can be controlled.

The above object of the present invention can be achieved by an information provision apparatus of the present invention. The information provision apparatus included in a charging system for charging a fee generated by using an information provision system comprising: a communication network including a monitoring apparatus for monitoring a state of using the communication network; a terminal apparatus for performing communication via the communication network; an administrator's apparatus belonging to an administrator who administrates a state of using communication of the terminal apparatus; and the information provision apparatus for providing the terminal apparatus with information via the communication network; the information provision apparatus comprising: an information transmission device for transmitting information in response to a request from the terminal apparatus; an encryption device for encrypting the information to be transmitted to the terminal apparatus; and a decryption information transmission device for transmitting decryption information, which makes it possible to decrypt the encrypted information in the terminal apparatus, to the terminal apparatus.

According to the present invention, since the encrypted information is sent to the terminal apparatus and the information for making it possible to decrypt this information is also sent to the terminal apparatus, a time difference is given to transmission of these pieces of information, whereby the user of the terminal apparatus can receive the information with a large volume, which the user requires originally, collectively in the second time frame and receive the decryption information later, at which point the use of the information is made possible. In addition, after the terminal apparatus has received the encrypted information, in the case in which the terminal apparatus requires the information, the decryption information is requested again. Consequently, the encrypted information can be sent from the information provision apparatus in terms of promotion and advertisement of the information which should be provided originally.

The above object of the present invention can be achieved by a charging method of the present invention. The charging method for charging a fee generated by using an information provision system comprising: a communication network including a monitoring apparatus for monitoring a state of using the communication network; a terminal apparatus for performing communication via the communication network; an administrator's apparatus belonging to an administrator who administrates a state of using communication of the terminal apparatus; and an information provision apparatus for providing the terminal apparatus with information via the communication network; the charging method comprising: a first calculation process of calculating a first fee generated by using the information provision system; a charging processing process of performing processing for charging the administrator the first fee; a payment acceptance process of performing processing for the administrator to pay a second fee which is set to a fixed amount in advance by a user of the terminal apparatus; and a control process of controlling generation of the first fee according to charging conditions of the communication network at the time when the information provision system is used.

According to the present invention, in charging a fee generated by the terminal apparatus of the information provision system performing communication including exchange of information, a new charging system can be provided. In addition, in a state in which a second fee which the user of the terminal apparatus pays to the administrator is a fixed amount and, on the other hand, a first fee which the administrator is charged varies according to a state of using the terminal apparatus, since generation of a first fee is controlled according to charging conditions of the communication network, the first fee which the administrator is charged can be prevented from becoming excessive, and financial burden on the administrator would not be excessive.

The above object of the present invention can be achieved by a data-recording medium of the present invention. The data-recording medium having recorded therein a charging control program so as to be readable by a computer, the computer included in a charging system for charging a fee generated by using an information provision system comprising: a communication network including a monitoring apparatus for monitoring a state of using the communication network; a terminal apparatus for performing communication via the communication network; an administrator's apparatus belonging to an administrator who administrates a state of using communication of the terminal apparatus; and an information provision apparatus for providing the terminal apparatus with information via the communication network; the charging control program causing the computer to function as: a first calculation device for calculating a first fee generated by using the information provision system; a charging processing device for performing processing for charging the administrator the first fee; a payment acceptance device for performing processing for the administrator to pay a second fee which is set to a fixed amount in advance by a user of the terminal apparatus; and a control device for controlling generation of the first fee according to charging conditions of the communication network at the time when the information provision system is used.

According to the present invention, the computer included in the charging system functions so as to calculate the first fee generated through the use of the information provision system, perform processing for charging the administrator the first fee, perform processing for the administrator to receive payment of the second fee set to a fixed amount from the user of the terminal apparatus, and control generation of the first fee according to charging conditions of the communication network at the time when the information provision system is used. Thus in charging a fee generated by the terminal apparatus of the information provision system performing communication including exchange of information, a new charging system can be provided. In addition, in a state in which a second fee which the user of the terminal apparatus pays to the administrator is a fixed amount and, on the other hand, a first fee which the administrator is charged varies according to a state of using the terminal apparatus, since generation of a first fee is controlled according to charging conditions of the communication network, the first fee which the administrator is charged can be prevented from becoming excessive, and financial burden on the administrator would not be excessive.

### BRIEF DESCRIPTION OF THE DRAWINGS

In the accompanying drawings:
FIG. 1 is a block diagram showing a schematic structure of a charging system in accordance with a first embodiment;
FIG. 2 is a block diagram showing a detailed structure of an attached terminal of a communication type car-navigation apparatus which is a component constituting the charging system;
FIG. 3 is a block diagram showing a detailed structure of a communication apparatus which is a component constituting the charging system;
FIG. 4 is a block diagram showing a detailed structure of a processing apparatus which is a component constituting the charging system;
FIG. 5 is a block diagram showing a detailed structure of a service provision apparatus which is a component constituting the charging system;
FIG. 6 is a flow diagram showing a flow of information at a stage of charging a usage fee in the charging system;
FIG. 7A is a flow diagram showing a flow of information at a stage of transmitting information requested by an attached terminal T of an immediate request mode in the charging system; and
FIG. 7B is a block diagram showing a flow of information at a stage of transmitting information requested by an attached terminal T of a reservation mode in the charging system.

### DESCRIPTION OF THE PREFERRED EMBODIMENTS

Next, preferred embodiments of the present invention will be described with reference to the accompanying drawings.

Note that the embodiments described below are embodiments in the case in which, in an information provision system including: a communication network provided with a communication apparatus (monitoring apparatus), which monitors a state of using the communication network, owned by a communication carrier; an attached terminal (terminal apparatus) of a communication type car-navigation apparatus for personal use for performing communication via this communication network; a processing apparatus (administrator's apparatus) owned by an administrator who administers a state of using communication of the attached terminal; and a service provision apparatus (information provision apparatus) which is owned by a so-called contents provider and transmits information such as music to the attached terminal. And the present invention is applied to these embodiments in a charging system in charging a fee generated through use of this information provision system.

### (I) First embodiment

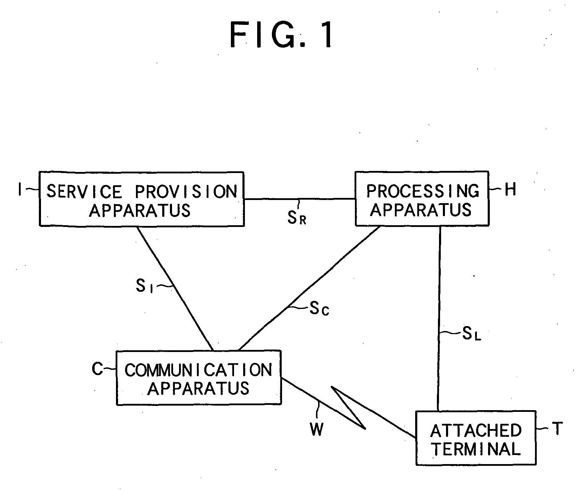

First, a first embodiment in accordance with the present invention will be described with reference to FIGS. 1 to 7B.

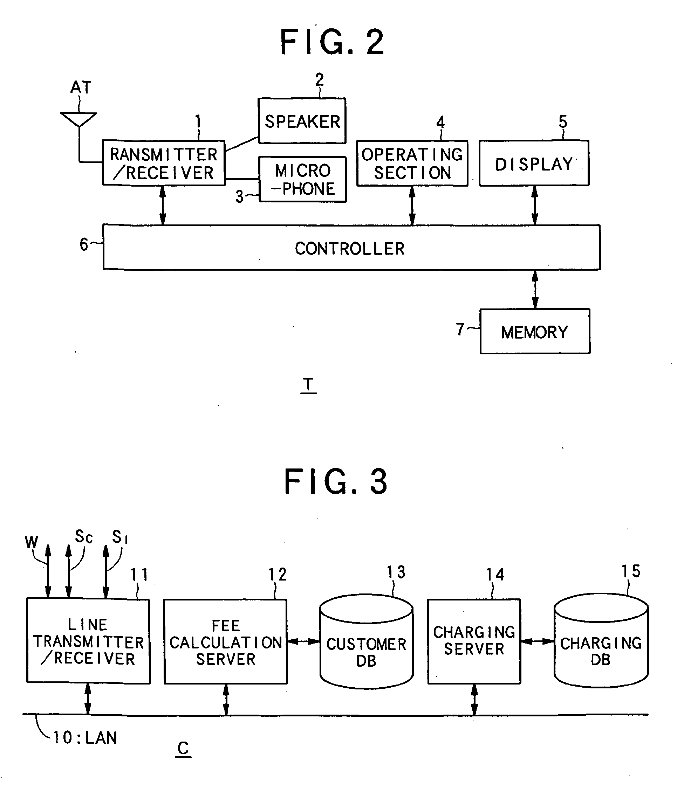

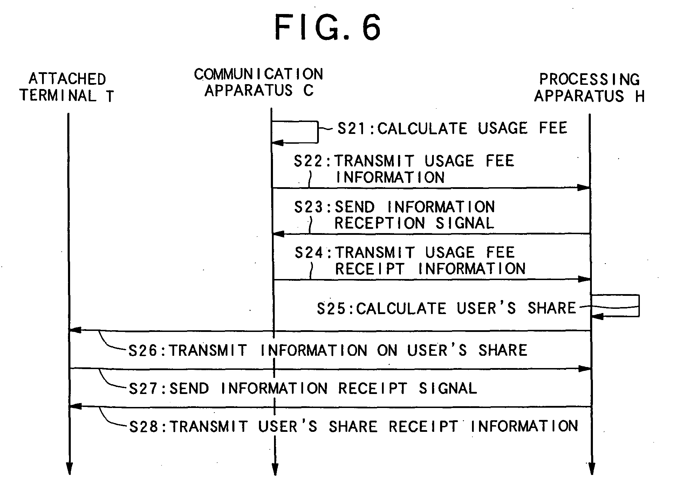

Note that FIG. 1 is a block diagram showing a schematic structure of a charging system in an information provision system in accordance with the first embodiment. FIGS. 2 to 5 are block diagrams showing a detailed structure for components constituting the charging system, respectively. FIGS. 6 to 7B are flow diagrams showing a flow of information in the charging system.

As shown in FIG. 1, the information provision system in accordance with the first embodiment includes a communication network N, an attached terminal T of a communication type car-navigation apparatus for personal use (hereinafter simply referred to as attached terminal T), a processing apparatus H, and a service provision apparatus I. The communication network N provides a communication apparatus C, which monitors a state of using the communication network N, in a communication carrier. The attached terminal T performs communication via this communication network N. The processing apparatus H is owned by an administrator who administers (manages) a state of using communication of the attached terminal T. The service provision apparatus I is owned by a so-called contents provider (information provider) and provides various kinds of information to the attached terminal T.

The communication network N is owned by a so-called communication carrier. And the information provision system and the charging system of this embodiment use a part of this communication network N.

The communication apparatus C connects the processing apparatus H, the service provision apparatus I, and the attached terminal T via the communication network N and relays various kinds of information between the service provision apparatus I and the attached terminal T. The communication apparatus C further performs processing for calculating a usage fee of the information provision system and processing for charging the calculated fees. The usage fee of the information provision system consists of a communication fee for the connection and the relay, and a service provision fee (information fee). Hereinafter, the usage fee of the information provision system is simply referred to as usage fee. Note that, as described later, in this embodiment, the administrator is charged the usage fees calculated by the communication apparatus C.

The processing apparatus H is connected with each of the communication apparatus C, the service provision apparatus I, and the attached terminal T via the communication network N. Thereby the processing apparatus H performs processing for suppressing generation of a fee for using the information provision system according to charging conditions of the communication network N at the time when the information provision system is used. And the processing apparatus H also performs processing for receiving payment of a fixed amount of fee from a user of the attached terminal T.

A line connecting respective components in the communication network N is a wired line or a wireless line. For example, more specifically, the respective components are connected by lines as described below.
(1) A line W connecting the attached terminal T and the communication apparatus C is a wireless line. Through the line W, a signal for a request or the like of information, and the like are sent from the attached terminal T to the communication apparatus C. And, at the same time, through the line W, information or the like transmitted from the service provision apparatus I is relayed to the attached terminal T from the communication apparatus C.
(2) A line Sc connecting the communication apparatus C and the processing apparatus H is a wired line. Through the line Sc, a signal of a request or the like of information of the attached terminal T and charging information on a fee for using the information provision system, and the like are transmitted from the communication apparatus C to the processing apparatus H and. And, at the same time, through the line Sc, a signal of a reply or the like in response to a request or the like for information of the attached terminal T, a signal indicating that charging information has been accepted, and the like are transmitted from the processing apparatus H to the communication apparatus C.
(3) A line S_{I} connecting the communication apparatus C and the service provision apparatus I is a wired line. Through the line S_{I}, information to be transmitted to the attached terminal T, and the like are transmitted from the service provision apparatus I to the communication apparatus C.
(4) A line S_{R} connecting the processing apparatus H and the service provision apparatus I is a wired line. Through the line S_{R}, a signal of information or the like requested by the attached terminal T, and the like are sent from the processing apparatus H to the service provision apparatus I.
(5) A line S_{L} connecting the processing apparatus H and the attached terminal T is a wired line or a wireless line. Through the line S_{L}, a signal of charging information or the like on payment of a fixed amount of fee, and the like are sent from the processing apparatus H to the attached terminal T. And, at the same time, through the line S_{L}, a signal indicating that the charging information has been accepted, and the like are sent from the attached terminal T to the processing apparatus H.

Note that, in the following description, the user of the attached terminal T of the communication type car-navigation apparatus may be simply referred to as a user. And the administrator of a state of using communication of the user may be simply referred to as an administrator.

Next, a detailed structure of each component will be described.

First, a detailed structure of the attached terminal T will be described with reference to FIG 2.

As shown in FIG. 2, the attached terminal T of the first embodiment includes an antenna AT, a transmitter / receiver 1, a speaker 2, a microphone 3, an operating section 4, a display 5, a controller 6, and a memory 7.

Next, operations will be described.

First, information transmitted from the communication apparatus C by wireless communication via the communication line W, which is established between a line transmitter / receiver 11 of the communication apparatus C described later and the transmitter / receiver 1, is inputted to the transmitter / receiver 1 via the antenna AT.

Then, the transmitter / receiver 1 subjects the inputted information to reception processing such as demodulation processing set in advance. In addition, the transmitter / receiver 1 outputs sound information in the received information to the speaker 2. Further, the transmitter / receiver 1 outputs image information in the received information to the display 5 via the controller 6.

On the other hand, the sound (including voice) inputted via the microphone 3 is subjected to transmission processing such as modulation processing set in advance in the transmitter / receiver 1. And then, the sound subjected to transmission processing is outputted to the communication apparatus C via the antenna AT and the line W.

In addition, an operation necessary for performing the above-described transmission and reception of information is executed by the user in the operating section 4. An operation signal corresponding to the executed operation is outputted to the controller 6 from the operating section 4.

In this way, the controller 6 unitarily processes the transmission and reception processing of sound information and image information. Note that information necessary for the processing is stored in a memory temporarily if necessary. And information necessary for the processing is read out to be supplied for the processing. In addition, information, which should be notified to the user in performing the processing, is displayed on the display 5.

In parallel with the above-mentioned processing, based upon information exchanged between the controller 6 and the communication apparatus C as described later, the controller 6 executes various kinds of information processing corresponding to the information. In this case, temporary storing of information in the memory 7 is also performed in parallel with the processing. Moreover, in execution of the information processing, necessary information is inputted by the user in the operating section 4. In addition, the necessary information is also displayed on the display 5.

Such an attached terminal T is incorporated in a car navigation apparatus. And the attached terminal T is used in an automobile in traveling or the like. In addition, the attached terminal T is also used in a place where a power supply is available such as a home by removing the car navigation apparatus from the automobile.

Next, a detailed structure of the communication apparatus C owned by the communication carrier will be described with reference to FIG. 3.

As shown in FIG. 3, the communication apparatus C of the first embodiment is installed in a facility owned by the communication carrier. More specifically, the communication apparatus C includes the line transmitter / receiver 11 which is connected to the lines S_{I}, Sc, and W, a fee calculation server 12 serving as first calculation device, a customer database 13, a charging server 14 serving as charging processing device, a charging database 15, and a LAN (Local Area Network) 10.

Next, operations will be described.

Upon receiving information, which should be transmit via the respective lines, via the LAN 10, the line transmitter / receiver 11 subjects this information to the transmission processing including modulation processing and the like set in advance. And the line transmitter / receiver 11 transmits the information after the transmission processing onto the line on which the information should be transmit. On the other hand, upon receiving the information, which should be received via the respective lines, from the respective lines, the line transmitter / receiver 11 subjects this information to the reception processing including demodulation processing and the like set in advance. And the line transmitter / receiver 11 transmits the information after the reception processing to a component requiring the information via the LAN 10.

The fee calculation server 12 sends a signal of information or the like requested by the attached terminal T to the processing apparatus H. And the fee calculation server 12 temporarily stores information on the user such as a user ID, which can authenticate this attached terminal T, in the customer database 13. In addition, based upon the information on the user of the attached terminal T acquired from the customer database 13, the fee calculation server 12 transmits information received from the service provision apparatus I to the attached terminal T to which the information should be transmitted.

For communication executed between the communication apparatus C and the attached terminal T as described above, the fee calculation server 12 calculates an amount of the communication, time required for the communication, and the like. In addition, the fee calculation server 12 receives information on an information fee for information transmitted to the attached terminal T, which is transmitted from the service provision apparatus I as described later. Based upon information on the calculated amount of communication, communication time, and the like, information on the transmitted information fee, information necessary for fee calculation such as the user ID or the like of the attached terminal T which has performed the communication, and customer information necessary for calculation processing outputted from the customer database 13, the fee calculation server 12 performs calculation processing for calculating a fee for using the information provision system with respect to the communication. Moreover, the fee calculation server 12 transmits information on the calculated usage fee and the user of the attached terminal T, which has performed the communication, to the charging server 14 via the LAN 10.

The customer database 13 stores information necessary for the calculation processing. The information necessary for the calculation processing is more specifically, for example, individual information such as a name and an address of a user. The customer database 13 outputs the information to the fee calculation server 12 such that the information is served for the calculation processing. In addition, the customer database 13 receives information on the user of the attached terminal T, who requests the above-mentioned information, from the fee calculation server 12. And the customer database 13 temporarily stores the information. The customer database 13 further outputs the information to the fee calculation server 12 in order to transmit it to the attached terminal T.

The charging server 14 outputs the information for charging the administrator the usage fee, which includes the information on both the usage fee and the user, to the charging database 15. And the charging server 14 causes the charging database 15 to store the information. Moreover, based upon the information for charging the administrator the usage fee outputted from the charging database 15, the charging server 14 performs charging processing described later for charging the usage fee. Then, the charging server 14 transmits the information on an amount, which the administrator is charged by the charging processing, to the line transmitter / receiver 11 via the LAN 10 such that the information is transmitted to the processing apparatus H via the line Sc.

The charging database 15 stores the information, which is inputted from the charging server 14, for charging the administrator the usage fee. In addition, the charging database 15 outputs the information on the amount, which the administrator is charged, to the charging server 14 in response to a request from the charging server 14.

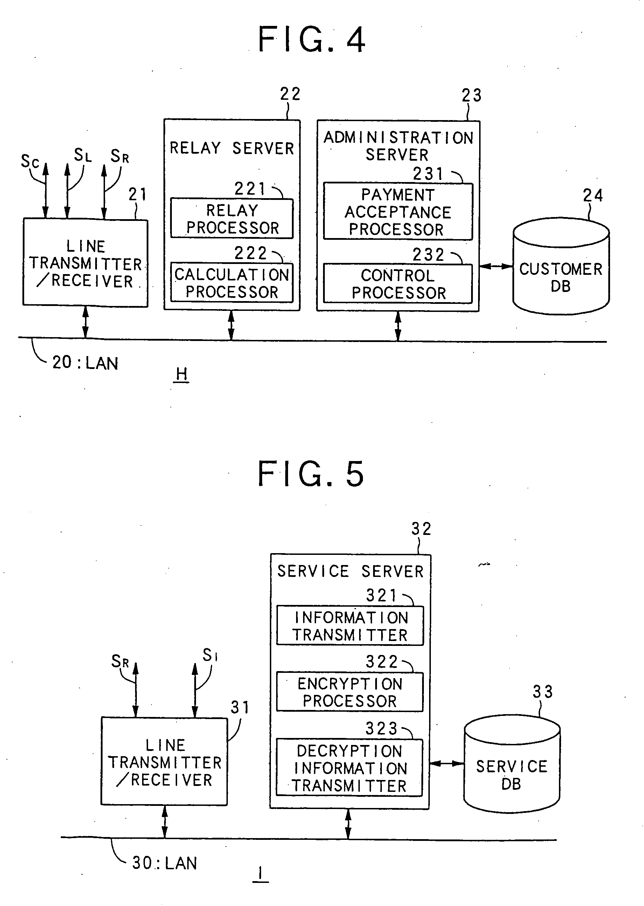

Next, a detailed structure of the processing apparatus H will be described with reference to FIG. 4.

As shown in FIG. 4, the processing apparatus H is installed in a facility owned by the administrator who administers a state of using communication of the attached terminal T. More specifically, the processing apparatus H includes a line transmitter / receiver 21 connected to the lines S_{C}, S_{L}, and S_{R}, a relay server 22 provided with a relay processor 221 serving as relay device and a calculation processor 222 serving as second calculation device, a administration server 23 provided with a payment acceptance processor 231 serving as payment acceptance device and a control processor 232 serving as control device, a customer database 24 serving as storage device, and a LAN 20.

Next, operations will be described.

Upon receiving information which should be transmitted via the respective lines from the LAN 20, the line transmitter / receiver 21 subjects this information to transmission processing including modulation processing and the like set in advance. And then, the line transmitter / receiver 21 transmits the information after the transmission processing onto the line on which the information should be transmitted. On the other hand, upon receiving the information, which should be received via the respective lines, from the respective lines, the line transmitter / receiver 21 subjects this information to reception processing including demodulation processing and the like set in advance. And then, the line transmitter / receiver 21 transmits the information after the reception processing to a component requiring the information via the LAN 20. In particular, the line transmitter / receiver 21 detects charging information exchanged over the respective lines. Then, the line transmitter / receiver 21 outputs the detected charging information to the payment acceptance section 231 in the administration server 23 via the LAN 20.

The relay server 22 includes the relay processor 221 and the calculation processor 222. The relay processor 221 relays communication between the communication apparatus C and the service provision apparatus I. The calculation processor 222 calculates an amount of information transmitted to the attached terminal T. More specifically, the relay processor 221 receives a signal of information or the like, for which the attached terminal T requests transmission, from the communication apparatus C. And then, the relay processor 221 transmits request information to the service provision apparatus I such that the service provision apparatus I transmits this requested information. In addition, the calculation processor 222 calculates an amount of information transmitted to the attached terminal T from the service provision apparatus I. The calculation processor 221 transmits information on the user of the attached terminal T, which has performed this communication, to the administration server 23 via the LAN 20 together with information on the amount of information calculated in this way.

The administration server 23 includes the payment acceptance processor 231 and a control processor 232. The payment acceptance processor 231 performs processing for the administrator to receive payment of a fee set to a fixed amount in advance described later from the user of the attached terminal T. And the control processor 232 controls generation of the usage fee according to charging conditions of the communication network N at the time of using the information provision system described later. More specifically, the administration server 23 temporarily stores information on the calculated amount of information and information on the user of the attached terminal T in the customer database 24. The control processor 232 acquires the information temporarily stored in the customer database 24. And then, the control processor 232 performs control processing described later. The control processor 232 is provided with a comparison function, a prohibition function, a reservation function, an execution function, and a selection function in order to perform control processing. In addition, the payment acceptance processor 231 exchanges of necessary information with the customer database 24. And then, the payment acceptance processor 231 performs payment acceptance processing described later.

In addition to information necessary for the charging processing, which is the same as the information stored in the customer database 13 provided in the communication apparatus C, the customer database 24 stores information on a form of fee payment of the user of the attached terminal T necessary for the payment acceptance processing. The customer database 24 outputs the information to the administration server 23 such that the information is served for the payment acceptance processing. In addition, the customer database 24 receives the information on the calculated amount of information and the information on the user of the attached terminal T from the administration server 23 and temporarily stores the information. The customer database 24 further outputs the information to the administration server 23 in order to perform control processing described later.

Next, a detailed structure of the service provision apparatus I will be described with reference to FIG. 5.

As shown in FIG. 5, the service provision apparatus I is installed in a facility owned by a so-called contents provider. More specifically, the service provision apparatus I includes a line transmitter / receiver 31 connected to the lines S_{R} and S_{I}, a service server 32 provided with an information transmitter 321 serving as information transmission device, an encryption processor 322 serving as encryption device, and a decryption information transmitter 323 serving as decryption information transmission device, a service database 33 serving as storage device, and a LAN 30.

Next, operations will be described.

Upon receiving information, which should be transmitted via the respective lines, from the LAN 30, the line transmitter / receiver 31 subjects the information to transmission processing including modulation processing and the like set in advance. And then, the line transmitter / receiver 31 transmits the information after the transmission processing onto the line on which the information should be transmitted. On the other hand, upon receiving information, which should be received via the respective lines, from the respective lines, the line transmitter / receiver 31 subjects the information to reception processing including demodulation processing and the like set in advance. And then, the line transmitter / receiver 31 transmits the information after the reception processing to components requiring the information via the LAN 30. In particular, the line transmitter / receiver 31 detects a signal for information requested by the attached terminal T to be transmitted, which is exchanged on the line S_{R}, and outputs the signal to the service server 32 via the LAN 30.

The service server 32 includes the information transmitter 321, the encryption processor 322, and the decryption information transmitter 323. The information transmitter 321 transmits information according to a request from the attached terminal T. The encryption processor 322 encrypts the information to be transmitted to the attached terminal T. And the decryption information transmitter 323 transmits decryption information for making it possible to decrypt the encrypted information in the attached terminal T. More specifically, the information transmitter 321 receives the signal for the information requested by the attached terminal T, which is transmitted from the processing apparatus H. And then, the information transmitter 321 receives information matching this signal from the service database 33. The information transmitter 321 transmits the received information to the attached terminal T via the communication apparatus C. When this information is transmitted, the encryption processor 322 encrypts the information such that the information cannot be directly read out in attached terminals other than the attached terminal T. On the other hand, the decryption information transmitter 323 transmits the decryption information for making it possible to read out the encrypted information in the attached terminal T to the attached terminal T. Note that, in the following description, unless specifically described, the information obtained by encrypting the information requested by the attached terminal T and the decryption information for the encrypted information are sent from the service server 32 simultaneously. Consequently, in the attached terminal T, it becomes possible to read out the received information without performing special processing. Moreover, the service server 32 transmits information on an information fee for the information, which is transmitted to the attached terminal T, to the communication apparatus C.

The service database 33 stores various kinds of information to be supplied to the attached terminal T. And the service database 33 outputs the information to the service server 32 in response to a request from the service server 32.

Next, charging processing in accordance with the first embodiment will be described with reference to FIG. 6.

Note that FIG. 6 is a flow diagram showing a flow of information among the attached terminal T, the communication apparatus C, and the processing apparatus H in the communication network N. FIG. 6 illustrates an embodiment of charging a fee for using the communication network N after the attached terminal T performs execution of communication and exchange of information using the communication network N. This charging processing is divided into a stage of charging processing for charging the administrator a usage fee (serving as a first fee) (steps S21 to S24) and a stage of payment acceptance processing for receiving payment of a fixed amount of fee (user's share serving as a second fee) from the user of the attached terminal T in the processing apparatus H of the administrator (steps S25 to S28).

First, after the attached terminal T has performed execution of communication and exchange of information once or more, the charging processing is performed in the charging server 14 in the communication apparatus C in each predetermined period decided in advance (steps S21 to S24). The charging processing is performed in order to charge the administrator a usage fee for the communication. Note that the predetermined period may be a fixed period such as one month or may be different every time a usage fee is charged. In addition, the charging server 14 may charge the administrator the usage fee each time communication is executed rather than in each predetermined period.

Concerning the charging processing, more specifically, the charging database 15 temporarily stores information on accumulated usage fees and information on the user of the attached terminal T which has performed this communication. When the charging server 14 performs the charging processing, the charging database 15 outputs the information to the charging server 14. Thereafter, the charging server 14 calculates a total amount of usage fees for one user (step S21). Then, the charging server 14 charges the administrator this total amount of usage fees. More specifically, information on this calculated total amount of usage fees and information on one user of the attached terminal T which has performed this communication are transmitted to the line transmitter / receiver 11 from the charging server 14 of the communication apparatus C via the LAN 10. Note that, information on this calculated total amount of usage fees and information on one user of the attached terminal T which has performed this communication are corresponding to information on the amount which the administrator is charged by the charging processing described above. These pieces of information will be hereinafter generally referred to as usage fee information. This usage fee information is transmitted to the line transmitter / receiver 21 of the processing apparatus H from the line transmitter / receiver 11 of the communication apparatus C via the line S_{c} (step S22).

Note that, when the total amount of usage fees which the administrator is charged in the charging server 14 of the communication apparatus C in this embodiment is calculated, the communication carrier can also mail a document describing the information on the calculated total mount of usage fees and the information on one user of the attached terminal T, which has performed this communication, (usage fee information) to inform the administrator to that effect.

Then, in the processing apparatus H, the line transmitter / receiver 21 transmits the usage fee information to the payment acceptance processor 231 of the administration server 23 via the LAN 20. Thereafter, the payment acceptance processor 231 sends a signal, which indicates that the usage fee information has been received, to the communication apparatus C (step S23).

The administrator who is charged the usage fee from the communication apparatus C pays this usage fee to the communication carrier which owns the communication apparatus C. At this point, the administrator may pay the usage fee to the communication apparatus C using electronic money according to an operation in the processing apparatus H. More specifically, the administrator operates the payment acceptance processor 231 of the processing apparatus H, whereby the processing apparatus H may send a signal, which indicates that electronic money of an amount of the usage fee is to be paid, to the communication apparatus C. In addition, in the case in which the payment acceptance processor 231 of the processing apparatus H receives the usage fee information, the processing apparatus H may automatically send a signal, which indicates that electronic money is to be paid, to the communication apparatus C. In the case in which the electronic money is used in this way, the paid electronic money is, for example, stored in a not-shown account in the charging server 14 of the communication apparatus C.

The communication carrier inputs the information on this paid amount to the charging server 14, or the paid electronic money is stored in the account in the charging server 14, whereby the charging server 14 recognizes that the usage fee has been paid. Then, information that the payment has been accepted is transmitted to the processing apparatus H from the charging server 14 via the LAN 10, the line transmitter / receiver 11, and the line Sc (step S24). Note that, after the charging server 14 recognizes the payment of the amount, the communication carrier may mail a document, which describes a notification that the payment has been accepted, to the administrator.

On the other hand, in order to cause the user of the attached terminal T to pay a fixed amount of fee set in advance, the payment acceptance processing (steps S25 to S28) is performed in the payment acceptance processor 231 in the administration server 23 of the processing apparatus H.

Concerning the payment acceptance processing, more specifically, first, the payment acceptance processor 231 receives the usage fee information from the line transmitter / receiver 21. Then, the payment acceptance processor 231 performs exchange of this usage fee information with the customer database 24. And the payment acceptance processor 231 collates the usage fee information with information on a fee payment form for the user of the attached terminal T in the customer database 24 describe later. And then, the payment acceptance processor 231 calculates a fixed amount conforming to the payment form for the user of the attached terminal T which the user should pay (step S25). In the following description, information on this calculated amount, which the user of the attached terminal T, is charged is referred to as user's share information. Further, the payment acceptance processor 231 charges the user of the attached terminal T this amount which the user should pay. This user's share information is transmitted to the line transmitter / receiver 21 from the payment acceptance processor 231 via the LAN 20.

Thereafter, the user's share information is transmitted to the transmitter / receiver 1 through the antenna AT of the attached terminal T from the line transmitter / receiver 21 of the processing apparatus H via the line S_{L} (step S26). The user's share information is stored in the memory 7 from the transmitter / receiver 1 via the controller 6. Then, the user's share information is displayed on the display 5 as a charged amount according to an operation executed from the operating section 4. Thereafter, the controller 6 sends a signal, which indicates that the user's share information has been received, to the communication apparatus C (step S27).

When an amount which the user of the attached terminal T is charged is calculated in the payment acceptance processor 231 of the processing apparatus H in this embodiment, the administrator can also mail a document describing information on this calculated amount (user's share information) to inform to that effect to the user of the attached terminal T.

Then, the user of the attached terminal T pays the charged amount to the administrator of the communication type car-navigation apparatus. At this point, the user may pay the user's share to the processing apparatus H using electronic money according to an operation in the attached terminal T. More specifically, the user may operate the operating section 4 of the attached terminal T to thereby send a signal, which indicates that electronic money of an amount of the user's share is to be paid, to the processing apparatus H. Alternatively, upon receiving the user's share information, the controller 6 of the attached terminal T may automatically send a signal, which indicates that electronic money is to be paid, to the processing apparatus H. In the case in which the electronic money is used in this way, the paid electronic money is, for example, stored in a not-shown account in the payment acceptance processor 231 of the processing apparatus H.

The administrator inputs information on this paid amount to the payment acceptance processor 231, or information on the paid electronic money is stored in the account in the payment acceptance processor 231, whereby the payment acceptance processor 231 recognizes that the terminal apparatus user's share has been paid. Then, information that the payment has been accepted is transmitted to the attached terminal T from the payment acceptance processor 231 via the LAN 20, the line transmitter / receiver 21, and the line S_{L} (step S28). Note that, after the payment acceptance processor 231 recognizes the payment of the amount, the administrator may mail a document, which describes notification that the payment has been accepted, to the user of the attached terminal T.

As described above, a series of flows of the charging processing of this embodiment ends. Among the flows, if the flow of the charging processing stage (steps S21 to S24) progresses in the above-described order and the flow of the payment acceptance stage (steps S25 to S28) also progresses in the above-described order, the other flows in time series are not limited to the order described in FIG. 6. For example, the processing of step S25 may be performed immediately after step S21.

In this embodiment, as described above, the administrator receives payment of a fixed amount of fee set in advance from the user and, on the other hand, is charged a usage fee corresponding to an amount of the user's usage of the information provision system by the communication carrier. Thus, in the control processor 232 of the processing apparatus H, a usage fee, which the administrator is charged by the communication carrier, becomes excessive compared with the fixed amount of fee paid by the user. Therefore, generation of the usage fee is controlled as described below such that the administrator does not bear financial burden.

That is, generation of the usage fee is controlled according to charging conditions of the communication network N in using the information provision system which are decided between the communication carrier and the administrator. The charging conditions are determined according to, for example, a line usage rate indicating a rate of used lines with respect to all lines in the communication network N. Between the communication carrier and the administrator, in the case in which this line usage rate is large, a higher communication fee is charged with respect to a fixed amount of communication. And similarly, in the case in which the line usage rate is small, a lower communication fee is charged with respect to the fixed amount of communication.

A reference line usage rate for dividing an amount of the communication fee to be charged is set in a range which is not disadvantageous for both the communication carrier and the administrator, according to the actual state of using the communication network N. Then, a day is divided into a time frame when the line usage rate of the communication network N is larger than the reference line usage rate set in advance (hereinafter referred to a first time frame) and a time frame when the line usage rate of the communication network N is smaller than the reference line usage rate (hereinafter referred to as a second time frame). Note that a day is divided into a time frame when a communication fee to be charged is high (e.g., daytime) and a time frame when the communication fee is low (e.g., nighttime) using the reference line usage rate rather than changing the time frames every moment by always monitoring the line usage rate and strictly using the reference line usage rate.

Further, since a communication fee to be charged in the first time frame is high, an amount of information per unit period which can be acquired by the attached terminal T in this time frame is restricted to be equal to or less than a reference amount of information set in advance or controlled to be suppressed to a degree similar to this.

On the other hand, in the case in which, in the first time frame, an amount of information requested by the attached terminal T exceeds the reference amount of information set in advance or the amount of information of the degree similar to this, since a communication fee charged in the second time frame is low, the attached terminal T does not acquire information until the second time frame.

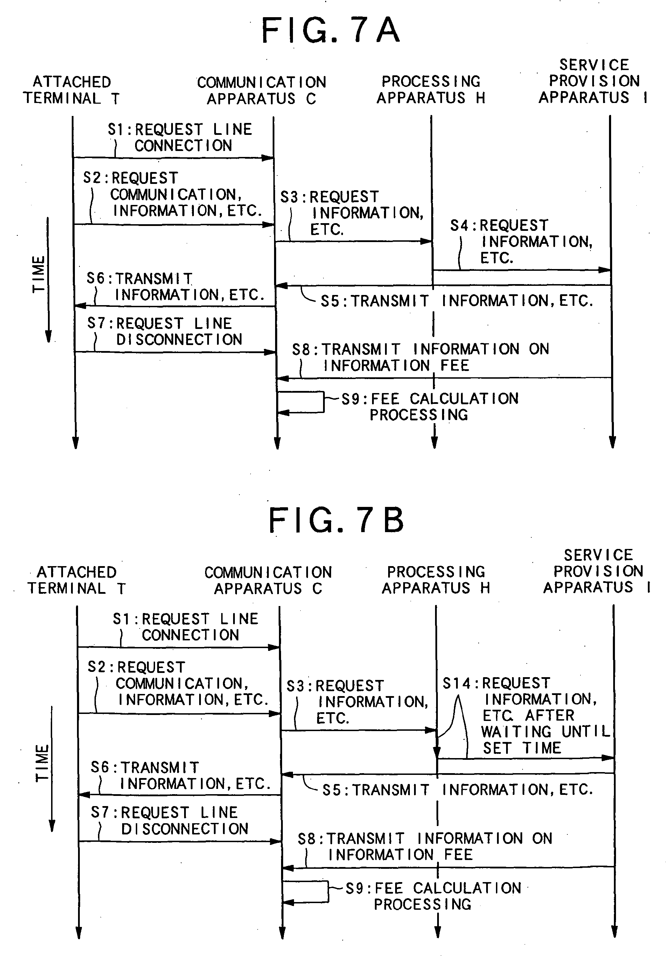

With reference to FIGS. 7A and 7B, a series of flows of the information transmission processing for transmitting information to the attached terminal T will be described. The information transmission processing is about the case in which an amount of information to be acquired by the attached terminal T is equal to or less than the reference amount of information set in advance and information is acquired immediately (FIG. 7A; hereinafter referred to as (A) an immediate request mode) and the case in which an amount of information to be acquired by the attached terminal T exceeds the reference amount of information set in advance and information is not acquired until the second time frame (FIG. 7B; hereinafter referred to as (B) a reservation mode).

First, (A) the immediate request mode of FIG. 7A will be described. As shown in FIG. 7A, at a transmission stage of necessary information, first, the attached terminal T sends a request for establishing connection between the communication apparatus C and the attached terminal T via the line W to the communication apparatus C via the line W (step S1). Moreover, the attached terminal T sends a request for transmitting information, which is necessary after establishing the connection, to the communication apparatus C via the line W (step S2).

Subsequently, the fee calculation server 12 in the communication apparatus C which has received the transmission request sends a request for information required by the attached terminal T and a user ID and the like of the attached terminal T requiring the information to the processing apparatus H via the line S_{c} (step S3).

Subsequently, the relay processor 221 in the processing apparatus H which has received the transmission request sends a request for the information required by the attached terminal T and the user ID and the like of the attached terminal T requiring the information to the service provision apparatus I via the line S_{R} (step S4). At this point, the administration server 23 temporarily stores information on the user ID and the like of the attached terminal T and information on an amount of information requested by the attached terminal T in the customer database 24.

Subsequently, the service server 32 in the service provision apparatus I which has received the transmission request exchanges information with the service database 33, thereby performing processing such as specifying the requested information and encrypting the necessary information. The service server 32 transmits the encrypted necessary information to the attached terminal T via the lies S_{I} and W and the communication apparatus C together with decryption information which makes it possible to decrypt the encrypted information (steps S5 and S6).

Upon recognizing that the transmission has ended, the attached terminal T sends a line disconnection request for disconnecting connection presently established between the attached terminal T and the communication apparatus C to the communication apparatus C via the line W (step S7).

On the other hand, the service provision apparatus I transmits information on information fee for the transmitted information to the communication apparatus C after step S5 (step S8). This information on an information fee may be transmitted each time information is transmitted to the attached terminal T or may be transmitted at each predetermined period decided in advance after transmitting information to the attached terminal T once or more. Note that this predetermined period may be a fixed period such as every month or may be varied each time the information is transmitted.

Subsequently, the fee calculation server 12 in the communication apparatus C calculates a communication fee according to an amount of executed communication and time required for the communication or the like, which is generated in transmitting the requested information to the attached terminal T. And the fee calculation server 12 calculates a usage fee by combining the communication fee with the information on an information fee transmitted by step S8. Note that, as described above, the usage fee indicates an amount found by adding up a communication fee for an amount of executed communication and time for the communication and an information fee for an amount of exchanged information or the like. The fee calculation server 12 outputs information on this calculated usage fee and the user of the attached terminal T, which has performed this communication, to the charging server 14 via the LAN 10 (step S9). In this way, a series of information transmission processing is completed.

Note that, in steps S1 to S9, steps S5 and S8 may be performed simultaneously, and an order of the subsequent steps S6, S7, and S9 is not limited to the order described in FIG. 7A.

Next, (B) the reservation mode of FIG. 7B will be described. Steps S1 to S3 in this mode are the same as steps S1 to S3 of (A) the immediate request mode in FIG.7A. However, a signal indicating the reservation mode is sent to the processing apparatus H from the attached terminal T via the communication apparatus C and the lines W and S_{c} together with the request for information (step S2).

After step S3, the control processor 232 of the processing apparatus H performs processing such that a signal, which indicates that information should be sent to the service provision apparatus I, is not sent until the second time frame determined between the communication carrier and the administrator in advance. Then, when it is the second time frame, the relay processor 221 in the processing apparatus H send the signal indicating that information should be sent to the service provision apparatus I (step S 14).

The following steps S5 to S9 are the same as steps S5 to S9 of (A) the immediate request mode described above. However, the line W between the attached terminal T and the communication apparatus C may be disconnected while a signal is not sent until the second time frame according to step S 14.

In the case in which the attached terminal T has acquired information with (A) the immediate request mode and (B) the reservation mode described above, a usage fee consisting of an information fee generated by the acquisition and a communication fee for the communication is calculated by step S21 of FIG. 6. Then, charging processing is performed as indicated by steps S22 to S28 of FIG. 6.

In the case in which the user of the attached terminal T tries to acquire information in the first time frame, in principle, the information is acquired with (A) the immediate request mode. Then, the control processor 232 compares an amount found by accumulating information acquired by the user of the attached terminal T and the reference amount of information set in advance. If the accumulated amount of acquired information has exceeded the reference amount of information set in advance, acquisition of information in this time frame is prohibited. Then, the control processor 232 selects (B) the reservation mode such that the attached terminal T can acquire information with (B) the reservation mode.

Note that, in the case in which the user of the attached terminal T tries to acquire information in the first time frame, if the accumulated amount of information obtained by the attached terminal T has not exceeded the reference amount of information, the user can determine whether the information is received with (A) the immediate request mode or (B) the reservation mode. This selection in (A) or (B) may be according to a fixed amount of fee decided in advance, which is paid to the administrator, or whether or not the user wishes to acquire the information immediately.

In addition, in the case in which the user of the attached terminal T tries to acquire information in the second time frame, although the information is not always acquired at a time interval same as that of (A) the immediate request mode, the information is acquired at least during the second time frame. An amount of information in this case is accumulated as an amount of information communicated in the second time frame. In this embodiment, an amount of information to be acquired by the attached terminal T in the second time frame is not limited.

Note that the modes for acquisition of information ((A) the immediate request mode and (B) the reservation mode), the time frames divided according to a line usage rate of the communication network N through which information is actually transmitted in the modes, and charging conditions of a usage fee are summarized as shown in Table 1.

**[Table 1 ]**

| | Time frame in which information is actually transmitted | Charging conditions |
|---|---|---|
| (A) Immediate request mode | Line usage rate is large (first time frame) | Large amount |
| (B) Reservation mode | Line usage rate is small (second time frame) | Small amount |

An amount of information received by the attached terminal T is limited to the fixed reference amount of information or less or controlled to be within a range of the same degree in this way. Consequently, since a usage fee which the administrator is charged can be prevented from being excessive with respect to a fixed amount of fee which the administrator receives from the user, financial burden on the administrator would not be excessive. In addition, since exchange of information is performed in the second time frame rather than the first time frame, stability of communication including exchange of information is improved.

Note that the reference amount of information for controlling an amount of information acquired by the attached terminal T is set - such that only the administrator doesn't bear financial burden and the user can acquire information as much as possible. This range of an amount of information may be set with respect to an amount of information acquired by the attached terminal T at a time (individual volume) or may be set with respect to an accumulated amount of information acquired by the attached terminal T in a unit period.

Here, a fixed amount decided in advance, which the user pays to the administrator, will be described. For example, this fixed amount can be set as described below.
(a) A total amount of fees for transmission of information with (A) the immediate request mode and (B). the reservation mode is set to a fixed amount for each unit period.
(b) A fee for transmission of information with (A) the immediate request mode is set to a fixed amount for each unit period and, in the case in which transmission of information with (B) the reservation mode or transmission of information in the second time frame is performed, a fee for the transmission is set to a fixed amount for certain this transmitted amount of information.
(c) A fee for a fixed amount of information is set to a fixed amount for each unit period and, in the case in which transmission of information exceeding this amount of information is performed, a fee for the transmission is set to a fixed amount for certain the transmitted amount of information.

Note that the above-mentioned unit period may be set to one month or two month. And the unit period may be set to a period, which is decided arbitrarily between the user of the attached terminal T and the administrator, for the payment of a certain amount. Each user of the communication type car-navigation apparatus can determine these forms of fee payment according to a financial state of the user. Then, the form of fee payment of each user is stored in the customer database 24 as described above.

As described above, a charging system in information provision system of the first embodiment is a charging system for charging a fee generated by using an information provision system comprising: a communication network N including a communication apparatus C for monitoring a state of using the communication network N; a attached terminal T for performing communication via the communication network N; a processing apparatus H belonging to an administrator who administrates a state of using communication of the attached terminal T; and a service provision apparatus I for providing the attached terminal T with information via the communication network N; the charging system comprising: fee calculation server 12 which calculates a usage fee generated by using the information provision system; charging server 14 which performs processing for charging the administrator the usage fee; payment acceptance processor 231 which performs processing for the administrator to pay a user's share which is set to a fixed amount in advance by a user of the attached terminal T; and a control processor 232 which controls generation of the usage fee according to charging conditions of the communication network N at the time when the information provision system is used.

Thus, in charging a fee generated by the attached terminal T of the information provision system performing communication including exchange of information, a new charging system is provided. In addition, in a state in which a user's share which the user of the attached terminal T pays to the administrator is a fixed amount and, on the other hand, a usage fee which the administrator is charged varies according to a state of using the attached terminal T, since generation of a usage fee is controlled according to charging conditions of the communication network N, the usage fee which the administrator is charged can be prevented from becoming excessive. And financial burden on the administrator would not be excessive.

In above described charging system, in a case where the service provision apparatus I performs the communication for transmission of information to the attached terminal T via the communication network N, and the a control processor 232 prohibits transmitting the information to the attached terminal T in the case in which an amount of the information requested by the attached terminal T to be transmitted is larger than a reference amount of information set in advance.

Thus, in the case in which the amount of information requested by the attached terminal T is larger than the reference amount of information set in advance, the requested information is prohibited from being transmitted to the attached terminal T. Therefore, a usage fee generated by exchange of this information can be controlled, and financial burden on the administrator can be surely reduced.

In above described charging system, in a case where the service provision apparatus I performs the communication for transmission of information to the attached terminal T via the communication network N, and the a control processor 232 cuts down on transmitting the information to the attached terminal T in the case in which an amount of the information requested by the attached terminal T to be transmitted is larger than a reference amount of information set in advance.

Thus, in the case in which the amount of information requested by the attached terminal T is larger than the reference amount of information set in advance, the requested information is cut down on from being transmitted to the attached terminal T. Therefore a usage fee generated by exchange of this information can be controlled, and financial burden on the administrator can be surely reduced.

In above described charging system, wherein the control processor 232 uses one of an accumulated amount and an individual amount of the information requested by the attached terminal T to be transmitted for the reference amount of information.

Thus, in the case in which the reference amount of information is the accumulated amount of information requested by the attached terminal T, transmission of information performed by the attached terminal T in each period when the information is accumulated is prohibited or cut down on (restrained). Therefore, a usage fee generated by exchange of this information can be controlled, and financial burden on the administrator can be surely reduced. In addition, in the case in which the reference amount of information is an individual volume of information requested by the attached terminal T, transmission of information performed by the attached terminal T for communication performed once is prohibited or cut down on (restrained). Therefore, a usage fee generated by exchange of this information can be controlled, and financial burden on the administrator can be surely reduced.

In above described charging system, the charging server 14 performs processing for charging according to the charging conditions which are determined according to a line usage rate as against all lines in the communication network N, and the control processor 232 controls generation of the first rate by differentiating the reference amount of information in a first time frame in which the line usage rate is larger than a reference line usage rate set in advance and a second time frame in which the line usage rate is smaller than the reference line usage rate.

Thus, since a day is divided into a time frame when a communication fee is high (first time frame) and a time frame when a communication fee is low (second time frame) according to charging conditions corresponding to the line usage rate, it becomes possible to, for example, further prohibit or cut down on (restrain) transmission of information in the time frame when the communication fee is high according to the charging conditions. Therefore, a usage fee generated by exchange of information, for which transmission is prohibited or cut down on (restrained), can be controlled, and financial burden on the administrator can be surely reduced.

In above described charging system, the control processor 232 comprises: first comparison function which compares, in the first time frame, an amount of the information requested by the attached terminal T to be transmitted and a first reference amount of information set in advance; and first prohibition function which prohibits transmitting the information when the amount of the information requested by the attached terminal T to be transmitted exceeds the first reference amount of information.

Thus, in the case in which a communication fee in the first time frame is high according to the charging conditions, since transmission of information in this time frame is prohibited, an amount of communication performed by the attached terminal T (a data amount, the number of times of communication, or time of connection) is suppressed. Therefore, a usage fee for the suppressed amount of communication can be controlled, and financial burden on the administrator can be surely reduced.

In above described charging system, the control processor 232 comprises: reservation function which makes a reservation such that actual transmission is performed in the second time frame for the information requested by the attached terminal T to be transmitted; and execution function which executes transmission of the information in the second time frame based upon contents reserved by the reservation function.

Thus, in the case in which a communication fee in the first time frame is high and a communication fee in the second time frame is low according to the charging conditions, the communication time frame when the communication fee is lower is effectively used for transmission of information, whereby a usage fee can be controlled, and financial burden on the administrator can be reduced. Moreover, since exchange of information is performed in the second time frame rather than the first time frame, stability of communication including exchange of information as the communication network N as a whole is improved.

In above described charging system, the control processor 232 further comprises selection function which is used for deciding whether or not to adopt the reservation function.

Thus, since such a selection function is provided, in the case in which the user of the attached terminal T tries to acquire information, the user can determine whether or not to adopt the reservation function according to whether the user wishes to acquire information immediately, whether the user wishes to acquire information with a large amount of information, or the like. In addition, by setting the modes in advance, the control processor 232 can automatically select one of the modes, which is convenient for the user of the attached terminal T.

In above described charging system, the processing apparatus H comprises: relay processor 221 which relays communication between the service provision apparatus I and the communication apparatus C; calculation processor 222 which calculates an amount of transmitted information which has been transmitted to the attached terminal T; and customer database 24 which stores the calculated amount of the information.

Thus, since the processing apparatus H includes the relay processor 221, the calculation processor 222, and the customer database 24 described above, a state of using communication of the attached terminal T can be grasped better, which is convenient for performing the control processing. Further, since the processing apparatus H belonging to the administrator performs the control processing, transmission of information to the attached terminal T can be prohibited or cut down on (restrained) accurately according to the charging conditions of the communication network N. Note that, the administrator pays a usage fee to the communication carrier.

As described above, a communication apparatus C included in a charging system for charging a fee generated by using an information provision system comprising: a communication network N including the communication apparatus C for monitoring a state of using the communication network N; a attached terminal T for performing communication via the communication network N; an processing apparatus H belonging to an administrator who administrates a state of using communication of the attached terminal T; and an service provision apparatus I for providing the attached terminal T with information via the communication network N; the communication apparatus C comprising: fee calculation server 12 which calculates a usage fee generated by using the information provision system; charging server 14 which performs processing for charging the administrator the usage fee.

Thus, it is sufficient for the communication carrier, which is the owner of the communication apparatus C, to charge only the administrator a calculated usage fee. Therefore, procedural burden on the communication carrier due to charging processing for charging each user of the attached terminal T, which has been conventionally performed by the communication carrier, can be reduced.

As described above, a processing apparatus H included in a charging system for charging a fee generated by using an information provision system comprising: a communication network N including a communication apparatus C for monitoring a state of using the communication network N; a attached terminal T for performing communication via the communication network N; the processing apparatus H belonging to an administrator who administrates a state of using communication of the attached terminal T; and an service provision apparatus I for providing the attached terminal T with information via the communication network N; the processing apparatus H comprising: payment acceptance processor 231 which performs processing for the administrator to pay a user's share which is set to a fixed amount in advance by a user of the attached terminal T; and relay processor 221 which relays communication between the service provision apparatus I and the communication apparatus C; calculation processor 222 which calculates an amount of transmitted information which has been transmitted to the attached terminal T; and customer database 24 which stores the calculated amount of the information.

Thus, the administrator receives payment of a fixed amount of fee from the user of the attached terminal T through the payment acceptance processor 231 provided in the processing apparatus H. On the other hand, since the processing apparatus H includes the relay processor 221, the calculation processor 222, and the customer database 24 described above, a state of using communication of the attached terminal T can be grasped better, which is convenient for performing the control processing. Further, since the processing apparatus H belonging to the administrator performs the control processing, transmission of information to the attached terminal T can be prohibited or cut down on (restrained) accurately according to the charging conditions of the communication network N, and a usage fee which the administrator is charged can be controlled.

### (II) Second embodiment

In a second embodiment, a method of using (A) the immediate request mode and (B) the reservation mode, in which information requested by an attached terminal is transmitted in the charging system of the first embodiment, is changed. Structures and operations of an attached terminal, a communication apparatus, and a service provision apparatus in the second embodiment are the same as the structures and the operations of the attached terminal T, the communication apparatus C, and the service provision apparatus I in the first embodiment, respectively.

In this embodiment, in principle, the attached terminal T acquires information with (A) the immediate request mode. Then, in the processing apparatus H, the calculation processor 222 and the customer database 24 accumulate and store information requested by the attached terminal T. In the case in which the control processor 232 recognizes that an accumulated amount has exceeded the reference amount of information, the control processor 232 performs control that information is automatically acquired with (B) the reservation mode.

The case in which the reference amount of information is 30 MB (MegaByte) a month will be described specifically.

The control processor 232 performs control such that information is transmitted with (A) the immediate request mode unless a signal indicating that information is requested with (B) the reservation mode is received from the attached terminal T. Then, the control processor 232 accumulates an amount of information with the calculation processor 222 and the customer database 24 each time the information is requested by the attached terminal T, for example, for one month from the beginning of a month. Then, when information is requested by the attached terminal T, and the control processor 232 recognizes that, if an amount of the information (e.g., 5 MB) is added to an accumulated amount of information (e.g., 28 MB), a total amount of information (33 MB) exceeds the reference amount of information of 30 MB, the control processor 232 prohibits transmission of the requested information to the attached terminal T. And, at the same time, the control processor 232 performs processing such that the information is transmitted with (B) the reservation mode. In addition, the control processor 232 sends a signal, which indicates that the information is transmitted with (B) the reservation mode, to the attached terminal T.

In addition, the case in which information is music information and a reference amount of information is five tunes a month will be described specifically.

The control processor 232 performs control such that information is transmitted with (A) the immediate request mode unless a signal indicating that information is requested with (B) the reservation mode is received from the attached terminal T. Then, the control processor 232 accumulates an amount of the information (number of tunes) with the calculation processor 222 and the customer database 24 each time the information is requested by the attached terminal T, for example, for one month from the beginning of a month. Then, in the case in which information is requested by the attached terminal T, and the control processor 232 recognizes that, if an amount of the information (e.g. two tunes) is added to an accumulated amount of information (e.g., four tunes), a total amount of information (six tunes) exceeds a reference amount of information of five tunes, the control processor 232 prohibits transmission of the requested information to the attached terminal T and, at the same time, performs processing such that the information is transmitted with (B) the reservation mode. In addition, the control processor 232 sends a signal, which indicates that the information is transmitted with (B) the reservation mode, to the attached terminal T.

### (III) Third embodiment

In a third embodiment, a method of using (A) the immediate request mode and (B) the reservation mode, in which information requested by an attached terminal is transmitted in the charging system of the first embodiment, is changed. Structures and operations of an attached terminal, a communication apparatus, and a service provision apparatus in the third embodiment are the same as the structures and the operations of the attached terminal T, the communication apparatus C, and the service provision apparatus I in the first embodiment, respectively.

In this embodiment, in principle, the attached terminal T acquires information with (A) the immediate request mode. Then, the control processor 232 in the processing apparatus H accumulates an amount of information requested by the attached terminal T. In the case in which the control processor 232 recognizes that the accumulated amount of information has exceeded the reference amount of information, the control processor 232 prohibits transmission of the information to the attached terminal T. And, at the same time, the control processor 232 sends a signal to the attached terminal T such that the user determines whether to acquire the information with (B) the reservation mode or stop acquisition of the information. Thereafter, in the case where the user adopts (B) the reservation mode by operating the operating section 4 of the attached terminal T, the control processor 232 performs processing such that the information is transmitted to the attached terminal T with (B) the reservation mode as described above.

In this embodiment, as in the second embodiment, the reference amount of information can be set to 30 MB a month or, in the case in which information is music, set to five tunes a month. Note that this reference amount of information is not limited to these values. Further, the control processor 232 accumulates an amount of information requested by the attached terminal T and, in the case in which it recognizes that the accumulated amount of information has exceeded the reference amount of information, the control processor 232 performs processing for prohibiting transmission of the information to the attached terminal T as in the second embodiment.

### (IV) Fourth embodiment

In a fourth embodiment, a method of using (A) the immediate request mode and (B) the reservation mode, in which information requested by an attached terminal is transmitted in the charging system of the first embodiment, is changed. Structures and operations of an attached terminal, a communication apparatus, and a service provision apparatus in the fourth embodiment are the same as the structures and the operations of the attached terminal T, the communication apparatus C, and the service provision apparatus I in the first embodiment, respectively.

In addition, in this embodiment, a reference amount of information is also set in the second time frame (hereinafter referred to as second reference amount of information). In the case in which an accumulated amount of information requested by the attached terminal T has exceeded this second reference amount in second time frame, the control processor 232 of the processing apparatus H prohibits transmission of the information as in the first time frame. However, the second reference amount of information is set to a value larger than the reference amount of information in the first time frame (hereinafter referred to as first reference amount of information). The second reference amount of information is set to a range in which the administrator does not bear excessive financial burden and the user can acquire information with the attached terminal T as much as possible when the second reference amount of information is combined with the first reference amount of information.

In this embodiment, each time the user of the attached terminal T acquires information, the user determines with which of (A) the immediate request mode and (B) the reservation mode information is acquired. For this purpose, the control processor 232 in the processing apparatus H accumulates an amount of information requested by the attached terminal T. And the control processor 232 sends a signal to the attached terminal T such that it is displayed on the display 5 of the attached terminal T how much information can be used at present with respect to the first reference amount of information in the first time frame and how much information can be used at present with respect to the second reference amount of information in the second time frame. Then, the control processor 232 of the processing apparatus H causes the user to select (A) the immediate request mode or (B) the reservation mode. The user determines which of the modes is to be adopted by operating the operating section 4 of the attached terminal T. The subsequent flow is the same as that described in the first embodiment. Note that, in the case in which the control processor 232 recognizes that the accumulated amount of information has exceeded the first reference amount of information in the first time frame and in the case in which it recognizes that the accumulated amount of information has exceeded the second reference amount of information in the second time frame, it prohibits selection of transmission of information, which uses a time frame in which the accumulated amount of information has exceeded the reference amount of information to the attached terminal T.

More specifically, in the case in which the first reference amount of information and the second reference amount of information per month are set, when the attached terminal T request information in a certain day of a month, the control processor 232 sends a signal for an amount of information which can be acquired in the rest of the month, for example, two tunes of music (or 10 MB) in the first time frame and three tunes of music (or 15 MB) in the second time frame, to the attached terminal T. Then, since the remaining amounts of information in the respective time frames are displayed on the display 5 of the attached terminal T, the user can determine with which mode the information is acquired taking into account the amount of information which can be acquired, whether the information is information which the user wishes to acquire immediately, or the like by operating the operating section 4.

As described above, a charging system of fourth embodiment is the charging system in the first embodiment, which the control processor 232 comprises: second comparison function which compares, in the second time frame, a second reference amount of information, which is set larger than the first reference amount of information in advance, and an amount of the information requested by the attached terminal T to be transmitted; and second prohibition function which prohibits transmitting the information when the amount of the information requested by the attached terminal T to be transmitted exceeds the second reference amount of information.

Thus, since transmission of the information to the attached terminal T is prohibited not only in the first time frame but also in the second time frame, an amount of communication performed by the attached terminal T (a data amount, the number of times of communication, or connection time) is suppressed, a usage fee for the suppressed amount of communication can be controlled, and financial burden on the administrator can be surely reduced. In addition, since transmission of information exceeding the reference amounts of information is limited in the first time frame and the second time frame, respectively, it becomes possible to estimate an upper limit of financial burden on the administrator, and the administrator can determine a fixed amount which is paid from the user of the terminal apparatus T in a range in which the administrator does not bear excessive burden.

### (V) Fifth embodiment

In a fifth embodiment, a method of using (A) the immediate request mode and (B) the reservation mode, in which information requested by an attached terminal is transmitted in the charging system of the first embodiment, is changed. Structures and operations of an attached terminal, a communication apparatus, and a service provision apparatus in the fifth embodiment are the same as the structures and the operations of the attached terminal T, the communication apparatus C, and the service provision apparatus I in the first embodiment, respectively.

In addition, in this embodiment, the second reference amount of information is set in advance also in the second time frame as in the fourth embodiment.

In this embodiment, in the case in which the user of the attached terminal T requests information in a certain day of a month, the control processor 232 calculates how much information can be used in the rest of the month in each time frame with respect to the first and second reference amounts of information for the month, and selects and executes a mode of the time frame in which a remaining amount of information is larger.

More specifically, in the case in which 10 MB remains in the first time frame and 15 MB remains in the second time frame, the control processor 232 performs processing so as to transmit the information with (B) the reservation mode such that the second time frame in which the remaining amount of information is larger is used.

In addition, in the case in which information is music and, more specifically, two tunes remain in the first time frame and three tunes remain in the second time frame, the control processor 232 performs processing so as to transmit the information with (B) the reservation mode such that the second time frame in which the remaining amount of information is larger is used.

According to this embodiment, since a usable amount of information of the two time frames can be kept until the end of a unit period, for example, the end of one month, in the case in which the user suddenly wishes to acquire information with one of the modes, the information can be acquired with any of the modes, which is convenient.

### (VI) Sixth embodiment

In a sixth embodiment, a method of using (A) the immediate request mode and (B) the reservation mode, in which information requested by an attached terminal is transmitted in the charging system of the first embodiment, is changed. Structures and operations of an attached terminal, a communication apparatus, and a service provision apparatus in the sixth embodiment are the same as the structures and the operations of the attached terminal T, the communication apparatus C, and the service provision apparatus I in the first embodiment, respectively.

In addition, in this embodiment, the second reference amount of information is set in advance also in the second time frame as in the fourth embodiment.

In this embodiment, in the case in which the user of the attached terminal T requests information in a certain day of a month, the control processor 232 calculates how much information can be used in the rest of the month in each time frame with respect to the first and second reference amounts of information for the month. At this point, in principle, the control processor 232 performs processing so as to select (A) the immediate request mode and transmits the information to the attached terminal T. Then, in the case in which the remaining usable amount of information in the month is smaller than a value specified by the user in advance with respect to the first reference amount of information in the first time frame, the control processor 232 performs processing so as to adopt (B) the reservation mode.

This embodiment is useful in the case in which the user wishes to keep a usable amount of information in each time frame and also wishes to acquire information as immediately as possible.

Note that this embodiment can be combined with the form in which the control processor 231 automatically selects each mode as described in the fifth embodiment. For example, in the case in which the remaining usable amount of information is the same in both the time frames in the fifth embodiment, the control processor 232 can perform processing so as to preferentially select (A) the immediate request mode to transmit information. And, in the case in which a remaining usable amount of information of the month in the first time frame is smaller than the value specified by the user in advance, adopt (B) the reservation mode.

More specifically, for example, the amount of information specified by the user in advance in the first time frame can be specified as 10 MB or two tunes in the case in which information is music.

### (VII) Seventh embodiment

In a seventh embodiment, a method of using (A) the immediate request mode and (B) the reservation mode, in which information requested by an attached terminal is transmitted in the charging system of the first embodiment, is changed. Structures and operations of an attached terminal, a communication apparatus, and a service provision apparatus in the seventh embodiment are the same as the structures and the operations of the attached terminal T, the communication apparatus C, and the service provision apparatus I in the first embodiment, respectively.

In this embodiment, in the case in which the user of the attached terminal T requests information, the control processor 232 performs so as to select (B) the reservation mode and perform transmission of the information, unless it receives a signal indicating that the information is requested with (A) the immediate request mode. In the case in which the control processor 232 has received a signal indicating that the information is requested with (A) the immediate request mode, it sends a signal to the service provision apparatus I such that the information is transmitted to the attached terminal T promptly.

In this embodiment, in principle, since transmission of information is performed in the second time frame by adopting (B) the reservation mode, a usage fee, which the administrator is charged, is controlled to be low. In addition, the user of the attached terminal T can promptly acquire information, which the user wishes to acquire immediately, by operating the operating section 4 of the attached terminal T to send a signal, which indicates that the information is requested with (A) the immediate request mode, to the processing apparatus H.

### (VIII) Eighth embodiment

In an eighth embodiment, a method of using (A) the immediate request mode and (B) the reservation mode, in which information requested by an attached terminal is transmitted in the charging system of the first embodiment, is changed. Structures and operations of an attached terminal, a communication apparatus, and a service provision apparatus in the eighth embodiment are the same as the structures and the operations of the attached terminal T, the communication apparatus C, and the service provision apparatus I in the first embodiment, respectively.

In this embodiment, a reference amount of information is specified by an individual volume for one communication rather than for one unit period. For example, the reference amount of information is specified as 10 MB or, in the case in which information is music, it is specified as two tunes. If an amount of information which the attached terminal T requests at a time is equal to or less than this specified reference amount of information, the control processor 232 of the processing apparatus H performs processing such that the attached terminal T can acquire the information with (A) the immediate request mode. On the other hand, in the case in which an amount of information which the attached terminal T requests at a time exceeds this specified reference amount of information, the control processor 232 performs control so as to transmit information to the attached terminal T with (B) the reservation mode.

In this embodiment, for example, in the case in which information which the user of the attached terminal T wishes to acquire is music, the user can acquire the information designating a plurality of tunes rather than one tune, which is convenient. In addition, in the case in which the attached terminal T requests the information (music) a plurality of number of times, this embodiment can be used even if the control processor 232 is controlled not to perform the processing for a fixed time but to perform processing so as to transmit information collectively. In addition, this embodiment can be used in the case in which a plurality of pieces of music are collected as a set, the case in which a plurality of pieces of music are downloaded for listening before purchase, and the like, which is convenient.

### (IX) Ninth embodiment

In a ninth embodiment, a method of using (A) the immediate request mode and (B) the reservation mode, in which information requested by an attached terminal is transmitted in the charging system of the first embodiment, is changed. Structures and operations of an attached terminal, a communication apparatus, and a service provision apparatus in the ninth embodiment are the same as the structures and the operations of the attached terminal T, the communication apparatus C, and the service provision apparatus I in the first embodiment, respectively.

In this embodiment, (A) the immediate request mode and (B) the reservation mode are used properly according to whether information requested by a user of an attached terminal is music before start of sale or music after start of sale. That is, in the case in which the attached terminal T requests information of music before start of sale, since it is impossible to transmit the information immediately, the control processor 232 of the processing apparatus H performs processing so as to transmit the information using (B) the reservation mode. On the other hand, in the case in which the attached terminal T requests information of music after start of sale, since it is possible to transmit the information immediately, the control processor 232 performs processing so as to transmit the information using (A) the immediate request mode. Note that in the case in which the information of music before start of sale is transmitted with (B) the reservation mode, the control processor 232 may perform processing so as to send information on a time frame, in which the music information is transmitted, to the attached terminal T.

### (X) Tenth embodiment

In a tenth embodiment, a method of using (A) the immediate request mode and (B) the reservation mode, in which information requested by an attached terminal is transmitted in the charging system of the first embodiment, is changed. Structures and operations of an attached terminal, a communication apparatus, and a service provision apparatus in the tenth embodiment are the same as the structures and the operations of the processing apparatus H, the communication apparatus C, and the service provision apparatus I in the first embodiment, respectively.

In an attached terminal of this embodiment, the controller 6 acquires positional information or the like from a communication type car-navigation apparatus main body and determines which of (A) the immediate request mode and (B) the reservation mode is used.

This embodiment assumes the case in which the attached terminal T is used in an automobile and the case in which the communication type car-navigation apparatus is removed from the automobile and the attached terminal T is used in a place where a power supply is available such as a home or a company.

In this embodiment, (A) the immediate request mode and (B) the reservation mode are used properly according to whether or not the attached terminal T is in a position close to a home, a company, or the like. That is, in the case in which the attached terminal T is away from a fixed position set in advance such as a home or a company more than a predetermined distance (e.g., 2 km), the controller 6 performs processing so as to transmit the information using (A) the immediate request mode. On the other hand, in the case in which the attached terminal T is within the predetermined distance from the fixed position set in advance such as a home or a company, the controller 6 performs processing so as to transmit the information using (B) the reservation mode.

More specifically, the controller 6 of the attached terminal T acquires information on a present position of the attached terminal T and, at the same time, acquires information on a calculated distance between the present position and the fixed position set in advance such as a home from the communication type car-navigation apparatus. Then, the controller 6 uses a distance from the fixed position set in advance (reference distance) to judge whether the distance between the present position and the fixed position exceeds the reference distance is equal to or less than the reference distance. The respective modes are used properly as descried above according to a result of the judgment.

Note that, in the case in which the attached terminal T moves to a position exceeding the reference distance from a position within the reference distance from the fixed position set in advance as the automobile travels, (A) the immediate request mode can be adopted automatically according to the processing of the controller 6.

If a position of the attached terminal T is close to a user's own home or the like, it is possible for the user to make a reservation for information, return to the home or the like immediately, and acquire the information there (B). On the other hand, if a position of the attached terminal T is far from the home or the like, the user can acquire information immediately in the automobile (A).

### (XI) Eleventh embodiment

In an eleventh embodiment, a method of using (A) the immediate request mode and (B) the reservation mode, in which information requested by an attached terminal is transmitted in the charging system of the first embodiment, is changed. Structures and operations of an attached terminal, a communication apparatus, and a service provision apparatus in the eleventh embodiment are the same as the structures and the operations of the attached terminal T, the communication apparatus C, and the service provision apparatus I in the first embodiment, respectively.

This embodiment assumes the case in which information is music. In this embodiment, (A) the immediate request mode and (B) the reservation mode are used properly according to whether music requested by the attached terminal T is one tune or a set of a plurality of tunes. That is, the control processor 232 of the processing apparatus H performs processing so as to transmit information using (A) the immediate request mode in the case in which the music requested by the attached terminal T is one tune. On the other hand, in the case in which the music requested by the attached terminal T is a set of a plurality of tunes, the control processor 232 performs processing so as to transmit the information using (B) the reservation mode. Note that this set of a plurality of tunes includes a combination of inconsistent pieces of music and a combination of pieces of music selected or edited in accordance with a certain theme.

In this embodiment, since the above-mentioned processing is performed in the control processor 232, the user does not have to instruct which mode is adopted using the attached terminal T each time the user requests information, which is convenient for the user.

In addition, in this embodiment, utilizing the functions of the encryption processor 322 and the decryption information transmitter 323 in the service provision apparatus I, encrypted information on a set of a plurality of tunes may be sent to the attached terminal T from the service provision apparatus I with (B) the reservation mode in the second time frame and, when requested by the attached terminal T separately, decryption information may be sent to the attached terminal T. In this way, the user can decrypt information, which is actually required by the attached terminal T, at any time regardless of a time frame. Control of time when such decryption information is transmitted is performed by the control processor 232 of the processing apparatus H.

Note that, by utilizing the encryption processing of information and the decryption information described above, the service provision apparatus I can transmit promotion and advertisement information or the like to the attached terminal T. That is, the service provision apparatus I transmits music for listening before purchase with a small amount of information to the attached terminal T for promotion and advertisement of the music, and further encrypts original of the music and transmits it to the attached terminal T. Then, in the case in which the user of the attached terminal T wishes to acquire original information on the music which the user listened to before purchase, the information on the original music can also be decrypted by further requesting to acquire the decryption information. In this embodiment, in this way, the attached terminal T can receive information of a large volume utilizing the second time frame. In addition, the administrator or the communication carrier becomes capable of receiving a price for promotion and advertisement from the owner of the service provision apparatus I, whereby financial burden on the administrator or the communication carrier can be reduced.

As described above, a charging system of eleventh embodiment is the charging system in the first embodiment, which the service provision apparatus I comprises: encryption processor 322 which encrypts the information to be transmitted to the attached terminal T; and decryption information transmitter 323 which transmits decryption information, which makes it possible to decrypt the encrypted information in the attached terminal T, to the attached terminal T.

Thus, since the encrypted information is transmitted to the attached terminal T and the information for making it possible to decrypt this information is also transmitted to the attached terminal T, a time difference is given to transmission of these pieces of information, whereby the user of the attached terminal T can receive the information with a large volume, which the user requires originally, collectively in the second time frame and receive the decryption information later, at which point the use of the information is made possible. In addition, after the attached terminal T has received the encrypted information, in the case in which the attached terminal T requires the information, the decryption information is requested again. Consequently, the encrypted information can be transmitted from the service provision apparatus I in terms of promotion and advertisement of the information which should be provided originally.

And a service provision apparatus I included in a charging system for charging a fee generated by using an information provision system comprising: a communication network N including a communication apparatus C for monitoring a state of using the communication network N; a attached terminal T for performing communication via the communication network N; an processing apparatus H belonging to an administrator who administrates a state of using communication of the attached terminal T; and the service provision apparatus I for providing the attached terminal T with information via the communication network N; the service provision apparatus I comprising: information transmitter 321 which transmits information in response to a request from the attached terminal T; encryption processor 322 which encrypts the information to be transmitted to the attached terminal T; and decryption information transmitter 323 which transmits decryption information, which makes it possible to decrypt the encrypted information in the attached terminal T, to the attached terminal T.

Thus, since the encrypted information is transmitted to the attached terminal T and the information for making it possible to decrypt this information is also transmitted to the attached terminal T, a time difference is given to transmission of these pieces of information, whereby the user of the attached terminal T can receive the information with a large volume, which the user requires originally, collectively in the second time frame and receive the decryption information later, at which point the use of the information is made possible. In addition, after the attached terminal T has received the encrypted information, in the case in which the attached terminal T requires the information, the decryption information is requested again. Consequently, the encrypted information can be transmitted from the service provision apparatus I in terms of promotion and advertisement of the information which should be provided originally.

### (XII) Twelfth embodiment

In a twelfth embodiment, a method of using (A) the immediate request mode and (B) the reservation mode, in which information requested by an attached terminal is transmitted in the charging system of the first embodiment, is changed. Structures and operations of an attached terminal, a communication apparatus, and a service provision apparatus in the twelfth embodiment are the same as the structures and the operations of the attached terminal T, the communication apparatus C, and the service provision apparatus I in the first embodiment, respectively.

In this embodiment, (A) the immediate request mode and (B) the reservation mode are used properly according to a line usage rate at the time when information is requested by the attached terminal T. That is, the communication apparatus C monitors the communication network N and grasps a line usage rate which varies every moment. Then, the control processor 232 of the processing apparatus H acquires information on the varying line usage rate, at the time when information is requested from the attached terminal T, from the communication apparatus C. In the case in which the line usage rate is equal to or less than a value set in advance (e.g., 80%), since a line is not occupied and it is possible to set a communication fee low, the control processor 232 performs processing so as to transmit the information using (A) the immediate request mode. On the other hand, in the case in which the information on the line usage rate acquired from the communication apparatus C, at the time when information is requested by the attached terminal T, exceeds the value set in advance (e.g., 80%), since the line is busy and a communication fee is set high, the control processor 232 performs processing so as to transmit the information in a time frame when a communication line usage rate is low and a communication fee is low using (B) the reservation mode. Alternatively, the control processor 232 performs processing so as to prohibit acceptance of (A) the immediate request mode and indicate to that effect on the attached terminal T, and performs processing such that (B) the reservation mode can be selected in the attached terminal T.

In this embodiment, since transmission of information to the attached terminal T is performed when the line usage rate is small, a fee can be set low, and financial burden on the administrator can be reduced more.

### (XIII) Modified forms

The charging system of the present invention is not limited to the charging systems of the respective embodiments described above, and includes various modified forms to be described below.

First, although only one service provision apparatus I of the respective embodiments is illustrated in FIG. 1, the present invention is not limited to this, and there may be a plurality of service provision apparatuses I. If there are the plurality of service provision apparatuses I, the user of the attached terminal T can receive provision of various kinds of information, which is convenient.

In addition, although music is described as an example as information to be provided from the service provision apparatus I, the service provision apparatus I can be applied to provision of various kinds of information such as video and text data other than music.

On the other hand, although only one attached terminal T is also illustrated in FIG. 1, the present invention is not limited to this, and there may be a plurality of attached terminals T. Then, the communication apparatus C and the processing apparatus H controls request for information from the plurality of attached terminals T and performs processing of charging and the like.

In addition, in the respective embodiments, the charging system in the information provision system including the communication apparatus C, the attached terminal T, the processing apparatus H, and the service provision apparatus I is described. However, in the present invention, the charging system only has to be provided with functions of the respective apparatuses. For example, the communication apparatus C and the service provision apparatus I may be one apparatus owned by a single person. And other plurality of apparatuses may function as one apparatus.

Although the calculation device and the charging processing device of the present invention are described as being provided in the fee calculation server 12 and the charging server 14 of the communication apparatus C owned by a communication carrier in the respective embodiments, the present invention is not limited to this. The calculation device and the charging processing device may be provided in the attached terminal T, the processing apparatus H, and the service provision apparatus I, respectively. Therefore, it is also possible for the service provision apparatus I to calculate an information fee for information transmitted to the attached terminal T and directly charge an administrator the information fee without the intervention of the communication apparatus C.

In addition, although the payment acceptance device and the control device of the present invention are described as being provided in the payment acceptance processor 231 and the control processor 232 in the processing apparatus H owned by an administrator in the respective embodiments, the present invention is not limited to this. The payment acceptance device and the control device may be provided in other apparatuses, respectively.

Although generation of a usage fee is controlled in the control processor 232 serving as control device in the respective embodiment, the present invention is not limited to this, and generation of a usage fee may be controlled in other apparatuses, components, or the like. For example, the attached terminal T included in the charging system may be provided with the same function as that of the control processor 232. Thus, since the same function as that of the control processor 232 is provided in the attached terminal T, the attached terminal T can prohibit or cut down on (restrain) exchange of information without communicating with other apparatuses and attached terminals, which is convenient for the user of the attached terminal T.

In addition, the function as the control processor 232 may be provided only in the processing apparatus H as in the respective embodiments or may be provided only in the attached terminal T as described above. However, the comparing function, the prohibition function, the reservation function, the execution function, the selection function, and the like may be provided in different apparatuses, respectively, as long as the charging system as a whole in the information provision system is provided with the same function as that of the control processor 232. Therefore, in the case in which (B) the reservation mode of the respective embodiments is used, the service provision apparatus I or the attached terminal T may perform only the control of time (execution function) that, for example, transmission of information to the attached terminal T is not performed until the second time frame.

Note that, the respective embodiments describes the form in which, in the case in which an amount of information requested by the attached terminal T exceeds the reference amount of information, the control processor 232 performs control so as to prohibit transmission of the information. However, the present invention is not limited to this. For example, even in the case in which an allowable volume may be provided for the reference amount of information and the amount of information requested by the attached terminal T exceeds the reference amount of information, if the exceeding amount is within a range of the allowable volume, the control processor 232 may not prohibit the information from being transmitted. In addition, the user may be charged the exceeding amount separately in excess of the second fee (user's share) set to a fixed amount in advance.

In addition, the attached terminal T of the communication type car-navigation apparatus is described as the terminal apparatus of the present invention in the respective embodiments. However, in addition to being incorporated in the communication type car-navigation apparatus, the terminal apparatus of the present invention may be a portable wireless telephone, a personal computer, or the like.

As described in the respective embodiments, the line (communication network N) connecting the respective components of the information provision system in the present invention includes both a wire line and a wireless line as in the case in which, for example, the terminal apparatus of the present invention is a portable wireless telephone or an attached terminal of a communication type car-navigation apparatus. In addition, the line S_{L} connecting the processing apparatus H and the attached terminal T of the respective embodiments may not actually exist. In this case, information or a signal to be exchanged through this line may be transmitted via the communication apparatus C, the wired line S_{c}, and the wireless line W, or may be mailed if it is information which can be exchanged by mail.

In addition, the line S_{I} connecting the service provision apparatus I and the communication apparatus C of the respective embodiments may not actually exist. In this case, information or a signal to be exchanged through this line may be transmitted via the processing apparatus H and the wired lines S_{R} and S_{C}. However, in the case in which information to be transmitted from the service provision apparatus I to the attached terminal T is large, it is preferable to install the line S_{I} because information is transmitted promptly.

The line S_{C} connecting the processing apparatus H and the communication apparatus C of the respective embodiments may not actually exist. In this case, information or a signal to be exchanged through this line may be transmitted via the service provision apparatus I and the wired lines S_{R} and S_{I}. Moreover, information which can be exchanged by mail such as charging information may be mailed.

In the respective embodiments, charging conditions of the communication network N at the time when the information provision system is used are described using time frames with a line usage rate with respect to all the lines of the communication network N as a reference. The charging conditions are not limited to those using a line usage rate or time frames as a reference but may be other charging conditions. In addition, although the time frames are described as being divided into two according to a line usage rate, it may be divided into three or more if charging conditions vary.

In the respective embodiments, a communication fee and a service provision fee (information fee) included in a usage fee of the information provision system are described as varying according to an amount of information communicated by the user of the attached terminal T or a length of time the user communicated and as varying according to an amount of information or the like acquired by the user of the attached terminal T, respectively. However, in the case in which the communication fee of this usage fee does not vary according to an amount or a length of time of communication, and is set to a fixed amount for a unit period (e.g., one month), the usage fee may be charged as the information fee varies according to an amount of information or the like acquired by the user of the attached terminal T. Setting of the usage fee is not specifically limited to the respective embodiments. In addition, in this case, communication in a period when a line usage rate (a crowding level, an amount of traffic) of the communication network N is high can be avoided to reduce the line usage rate of the communication network N. Further, communication in a period when a line usage rate of the communication network N is high is avoided, whereby stability of communication in receiving information from the information provision system can be improved.

In the respective embodiments, the fee calculation server 12 serving as first calculation device and the charging server 14 serving as charging processing device are represented separately and described. However, both the servers may be an identical server, and this server may constitute both the first calculation device and the charging processing device.

Although the customer database 13 and the charging database 15 are described as being provided in a facility owned by a communication carrier in the respective embodiments, the present invention is not limited to this. For example, the customer database 13 and the charging database 15 may be provided in remote locations as long as the databases are connected with the fee calculation server 12 and the charging server 14, respectively, via a line or lines and can show the above-mentioned functions.

In the respective embodiments, the service provision apparatus I includes the encryption processor 322 and the decryption information transmitter 323. And information to be transmitted to the attached terminal T is encrypted and transmitted so as not to be read by others. However, the present invention is not limited to this. That is, the service provision apparatus I may not include the encryption processor 322 and the decryption information transmitter 323. In addition, even if the service provision apparatus I includes these components, it may transmit information, which is transmitted to the attached terminal T, without encrypting the information.

Moreover, it is also possible to record a program corresponding to the flowchart shown in FIG. 6 or FIGS. 7A and 7B in an information recording medium such as a flexible disk or a hard disk, or acquire the program via a network such as the Internet and store the program, and read out to execute the program with a microcomputer or the like, thereby causing the microcomputer to function as the fee calculation server 12, the charging server 14, the payment acceptance processor 231, and the control processor 232 in accordance with the respective embodiments.

In addition, in (B) the reservation mode of the respective embodiments, in the case in which a part of information includes information which a so-called contents provider operating the service provision apparatus I desires to distribute (advertisement information, information belonging to promotion activities, etc.), it is also possible to cause the charging server 14 to function such that the contents provider is charged a fee.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A charging system for charging a fee generated by using an information provision system comprising: a communication network (N) including a monitoring apparatus (C) for monitoring a state of using the communication network (N); a terminal apparatus (T) for performing communication via the communication network (N); an administrator's apparatus (H) belonging to an administrator who administrates a state of using communication of the terminal apparatus (T); and an information provision apparatus (I) for providing the terminal apparatus (T) with information via the communication network (N); said charging system **characterized by**:
a first calculation device (12) for calculating a first fee generated by using said information provision system;
a charging processing device (14) for performing processing for charging the administrator the first fee;
a payment acceptance device (231) for performing processing for the administrator to pay a second fee which is set to a fixed amount in advance by a user of said terminal apparatus (T); and
a control device (232) for controlling generation of the first fee according to charging conditions of said communication network (N) at the time when the information provision system is used.

2. The charging system according to claim 1,
in a case where said information provision apparatus (I) performs the communication for transmission of information to said terminal apparatus (T) via said communication network (N), and
said control device (232) prohibits transmitting the information to said terminal apparatus (T) in the case in which an amount of the information requested by said terminal apparatus (T) to be transmitted is larger than a reference amount of information set in advance.

3. The charging system according to claim 1,
in a case where said information provision apparatus (I) performs the communication for transmission of information to said terminal apparatus (T) via said communication network (N), and
said control device (232) cuts down on transmitting the information to said terminal apparatus (T) in the case in which an amount of the information requested by said terminal apparatus (T) to be transmitted is larger than a reference amount of information set in advance.

4. The charging system according to claims 2 and 3,
wherein said control device (232) uses one of an accumulated amount and an individual amount of the information requested by the terminal apparatus (T) to be transmitted for the reference amount of information.

5. The charging system according to claims 2 and 3,
wherein said charging processing device (14) performs processing for charging according to a charging conditions which are determined according to a line usage rate as against all lines in said communication network, and
said control device (232) controls generation of the first rate by differentiating the reference amount of information in a first time frame in which the line usage rate is larger than a reference line usage rate set in advance and a second time frame in which the line usage rate is smaller than the reference line usage rate.

6. The charging system according to claim 5,
wherein said control device (232) comprises:
a first comparison device for comparing, in the first time frame, an amount of the information requested by said terminal apparatus (T) to be transmitted and a first reference amount of information set in advance; and
a first prohibition device for prohibiting transmitting the information when the amount of the information requested by the terminal apparatus (T) to be transmitted exceeds the first reference amount of information.

7. The charging system according to claim 5,
wherein the control device (232) comprises:
a reservation device for making a reservation such that actual transmission is performed in the second time frame for the information requested by said terminal apparatus (T) to be transmitted; and
an execution device for executing transmission of the information in the second time frame based upon contents reserved by the reservation device.

8. The charging system according to claim 6,
wherein the control device (232) comprises:
a second comparison device for comparing, in the second time frame, a second reference amount of information, which is set larger than the first reference amount of information in advance, and an amount of the information requested by said terminal apparatus (T) to be transmitted; and
a second prohibition device for prohibiting transmitting the information when the amount of the information requested by said terminal apparatus (T) to be transmitted exceeds the second reference amount of information.

9. The charging system according to claim 7,
wherein said control device (232) further comprises selection device which is used for deciding whether or not to adopt said reservation device.

10. The charging system according to claims 2 and 3,
wherein said information provision apparatus (I) comprises:
an encryption device (322) for encrypting the information to be transmitted to said terminal apparatus (T); and
a decryption information transmission device (323) for transmitting decryption information, which makes it possible to decrypt the encrypted information in said terminal apparatus (T), to said terminal apparatus (T).

11. The charging system according to claims 2 and 3,
wherein the administrator's apparatus (H) comprises:
a relay device (221) for relaying communication between said information provision apparatus (I) and the monitoring apparatus (C);
a second calculation device (222) for calculating an amount of transmitted information which has been transmitted to said terminal apparatus (T); and
a storage device (24) for storing the calculated amount of the information.

12. The charging system according to claim 1, wherein at least one of said communication network (N) including the monitoring apparatus (C), said terminal apparatus (T), said administrator's apparatus (H), and said information provision apparatus (I) provide at least one of said first calculation device (12), said charging processing device (14), said payment acceptance device (231), and said control device (232).

13. A monitoring apparatus (C) included in a charging system for charging a fee generated by using an information provision system comprising: a communication network (N) including the monitoring apparatus (C) for monitoring a state of using the communication network (N); a terminal apparatus (T) for performing communication via the communication network (N); an administrator's apparatus (H) belonging to an administrator who administrates a state of using communication of the terminal apparatus (T); and an information provision apparatus (I) for providing the terminal apparatus (T) with information via the communication network; said monitoring apparatus (C) **characterized by**:
a first calculation device (12) for calculating a first fee generated by using said information provision system;
a charging processing device (14) for performing processing for charging the administrator the first fee.

14. A terminal apparatus (T) included in a charging system for charging a fee generated by using an information provision system comprising: a communication network (N) including a monitoring apparatus (C) for monitoring a state of using the communication network (N); the terminal apparatus (T) for performing communication via the communication network (N); an administrator's apparatus (H) belonging to an administrator who administrates a state of using communication of the terminal apparatus (T); and an information provision apparatus (I) for providing the terminal apparatus (T) with information via the communication network (N); said terminal apparatus (T) **characterized by**:
a control device (232) for controlling generation of the first fee according to charging conditions of said communication network (N) at the time when the information provision system is used.

15. An administrator's apparatus (H) included in a charging system for charging a fee generated by using an information provision system comprising: a communication network (N) including a monitoring apparatus (C) for monitoring a state of using the communication network (N); a terminal apparatus (T) for performing communication via the communication network (N); the administrator's apparatus (H) belonging to an administrator who administrates a state of using communication of the terminal apparatus (T); and an information provision apparatus (I) for providing the terminal apparatus (T) with information via the communication network (N); said administrator's apparatus (H) **characterized by**:
a payment acceptance device (231) for performing processing for the administrator to pay a second fee which is set to a fixed amount in advance by a user of said terminal apparatus (T); and
a relay device (221) for relaying communication between said information provision apparatus (I) and the monitoring apparatus (C);
a second calculation device (222) for calculating an amount of transmitted information which has been transmitted to said terminal apparatus (T); and
a storage device (24) for storing the calculated amount of the information.

16. An information provision apparatus (I) included in a charging system for charging a fee generated by using an information provision system comprising: a communication network (N) including a monitoring apparatus (C) for monitoring a state of using the communication network (N); a terminal apparatus (T) for performing communication via the communication network (N); an administrator's apparatus (H) belonging to an administrator who administrates a state of using communication of the terminal apparatus (T); and the information provision apparatus (I) for providing the terminal apparatus (T) with information via the communication network (N); said information provision apparatus (I) **characterized by**:
an information transmission device (321) for transmitting information in response to a request from the terminal apparatus (T);
an encryption device (322) for encrypting the information to be transmitted to said terminal apparatus (T); and
a decryption information transmission device (323) for transmitting decryption information, which makes it possible to decrypt the encrypted information in said terminal apparatus (T), to said terminal apparatus (T).

17. A charging method for charging a fee generated by using an information provision system comprising: a communication network (N) including a monitoring apparatus (C) for monitoring a state of using the communication network (N); a terminal apparatus (T) for performing communication via the communication network (N); an administrator's apparatus (H) belonging to an administrator who administrates a state of using communication of the terminal apparatus (T); and an information provision apparatus (I) for providing the terminal apparatus (T) with information via the communication network (N); said charging method **characterized by**:
a first calculation process of calculating a first fee generated by using said information provision system;
a charging processing process of performing processing for charging the administrator the first fee;
a payment acceptance process of performing processing for the administrator to pay a second fee which is set to a fixed amount in advance by a user of said terminal apparatus (T); and
a control process of controlling generation of the first fee according to charging conditions of said communication network at the time when the information provision system is used.

18. A data-recording medium **characterized in that** said data-recording medium readable by a computer and on which a charging control program that causes the computer, the computer included in a charging system for charging a fee generated by using an information provision system comprising: a communication network (N) including a monitoring apparatus (C) for monitoring a state of using the communication network (N); a terminal apparatus (T) for performing communication via the communication network (N); an administrator's apparatus (H) belonging to an administrator who administrates a state of using communication of the terminal apparatus (T); and an information provision apparatus (I) for providing the terminal apparatus (T) with information via the communication network (N); said charging control program causing the computer to function as:
a first calculation device (12) for calculating a first fee generated by using said information provision system;
a charging processing device (14) for performing processing for charging the administrator the first fee;
a payment acceptance device (231) for performing processing for the administrator to pay a second fee which is set to a fixed amount in advance by a user of said terminal apparatus (T); and
a control device (232) for controlling generation of the first fee according to charging conditions of said communication network (N) at the time when the information provision system is used.
